# EUROPEAN PATENT APPLICATION

(11) **EP 4 693 218 A1**
(43) Date of publication of application: **11.02.2026**
(21) Application number: 24193652.5
(22) Date of filing: 08.08.2024
(51) Int. Cl.: G06V 10/764, G06V 10/82, G06V 20/69

(54) **MACROPHAGE POLARIZATION ASSAYS**

(71) Applicant: Sartorius Stedim Data Analytics AB, 903 33 Umeå (SE); Academisch Ziekenhuis Leiden, 2333 ZA Leiden (NL)
(72) Inventor: CHATRIAN, Andrea, 215 33 Malmö (SE); SÖRMANN PAULSSON, Elsa, 903 33 Umeå (SE); KESELMAN, Paul, Ann Arbor, 48108 (US); AUSTERJOST, Jonas, 37079 Göttingen (DE); BARNES, Kalpana, Royston, SG8 5HL (GB); VAN DER BERK, Linda, 2333 ZA Leiden (NL); DAVIS, Richard, 2333 ZA Leiden (NL)
(74) Representative: Mewburn Ellis LLP

(57) **Abstract**

Computer-implemented methods for identifying the macrophage polarization state of one or more macrophage cells in live cell culture, and drug screening methods making use of such methods are provided. The methods include obtaining single cell label-free images obtained using an optical label-free imaging technology, quantifying a plurality of single cell image-derived features, wherein the plurality of single cell image-derived features comprise: one or more intensity features, one or more shape features and one or more texture features; and identifying a macrophage polarization state associated with the single cell image using a trained machine learning classification model, trained to classify cells between a plurality of classes each associated with a different macrophage polarization state selected from: M0, M1, M2, and a plurality of M2 subtypes.

## Description

### Field of the Present Disclosure

The present disclosure relates to methods for analysing macrophage polarization in live cells, and in particular to monitor macrophage polarization subtypes using images of live cells in cell culture, using machine learning and label-free imaging data. Related methods, systems and products are described.

### Background

Macrophages play a crucial role in the inflammatory response and can be activated or modulated by various stimuli, including drugs. The major polarization states of macrophages are the classically activated (M1) phenotype, associated with pro-inflammatory responses, and the alternatively activated (M2) phenotype, associated with anti-inflammatory and tissue repair functions. M2 macrophages are divided into subcategories, including M2a, M2b, M2c, and M2d. These macrophages differ in their cell surface markers, secreted cytokines, and biological functions. M0 macrophages, also known as unpolarized or resting macrophages, represent a phenotype that exists before macrophages are exposed to specific stimuli that can polarize these to M1 or various M2 subsets. The naive M0 macrophages have M2-like phenotypic and functional properties, but do not secrete anti-inflammatory cytokines typical of M2 macrophages. The naive M0 macrophages are also obtained by the differentiation of monocytes.

The inflammatory effect of a drug can be evaluated in macrophages by assessing their response to the drug in terms of cytokine production, cell surface marker expression, and functional assays. All of these involve the use of extensive experimentation using immunoassays (sandwich or bead-based), transcriptome analysis, flow cytometry or immunofluorescence staining at different timepoints. These assays are expensive and time consuming.

Therefore, a need exists for improved systems and methods characterising macrophage populations and the effects of drugs, perturbations and diseases on macrophage function, which do not suffer from all of the drawbacks of the prior art.

### Summary

The present inventors hypothesised that it may be possible to evaluate inflammatory features of drugs or other agents using human iPSC-derived monocytes and macrophages, a high throughput live-cell imaging platform and a computer implemented method that can classify and quantify the differentiation and polarization status of macrophages. They developed an approach enabling the online evaluation of the macrophage inflammatory process using a method combining live cell imaging and *in silico* analysis, eliminating the need for extensive wet lab assays. In particular, the inventors used a microscope-based live-cell imaging platform embedded into an incubator unit. Human iPSC-derived monocytes and macrophages were cultured in microplate wells and exposed with different treatment conditions leading to population level validated macrophage polarization states. The cells were imaged over time using phase contrast imaging alone or in combination with live cell florescent markers. The images were processed using a multistep machine learning based pipeline comprising cell segmentation in phase contrast images, single cell image feature extraction and single cell classification using a machine learning model trained with population level ground truth labels, demonstrating remarkable accuracy for live cell classification of macrophage subtypes including M0, M1 and multiple M2 subtypes. This is particularly remarkable in that the models used were trained and applied exclusively on live cell data, and with soft classification labels due to the live cell nature of the work and the subtle differences between macrophage subtype populations.

According to a first aspect of the disclosure, there is provided a method for identifying the macrophage polarization state of one or more macrophage cells in live cell culture, the method comprising: (i) obtaining, by a processor, one or more single cell label-free images obtained using an optical label-free imaging technology, each single cell image showing a single live macrophage cell in cell culture; (ii) quantifying, by said processor and for each of the one or more single cell label-free images, a plurality of single cell image-derived features, wherein the plurality of single cell image-derived features comprise: one or more intensity features, one or more shape features and one or more texture features; and (iii) identifying, by said processor, a macrophage polarization state associated with the single cell image using a trained machine learning classification model, wherein the trained machine learning classification model is configured to take as input values for the plurality of single cell image-derived features and classify, using said input, a corresponding single cell between a plurality of classes each associated with a different macrophage polarization state selected from: M0, M1, M2, and a plurality of M2 subtypes, optionally M2a, M2b, M2c and M2d.

Because the method is non-invasive, optionally fully label-free and has low phototoxicity, it enables the monitoring of a macrophage population undergoing polarization or repolarization while the cell culture is underway without any perturbation of the polarization process, possibly in real-time and/or with repeated / constant monitoring. This enables the determination of inflammatory metrics based on the predictions made that can reflect dynamic aspects of the polarization process. This is not possible with any method that requires an invasive/destructive step as this perturbs or completely stops the polarization process. Further, the use of optical label-free images enables the identification of macrophage polarization states using imaging technologies that are widely available. Further, the use of a combination of size invariant features (like intensity and texture features) and shape features enables to capture subtle aspects of macrophage polarization, since individual macrophage subtypes can be associated with shape differences compared to some other subtypes but not other subtypes.

The method of the first aspect may have any one or any combination of the following optional features.

The machine learning classification model may have been trained using training data comprising, for each of a plurality of training single cell label-free images, values of the plurality of single cell image-derived features and a macrophage polarization state label, wherein the label for a single cell image is derived from the cell culture from which the respective single cell label-free image is obtained, wherein the same label is assigned to each single cell image derived from the same cell culture.

The single cell macrophage polarization state labels that were used in the training of the machine learning classification model may have been derived from the assumed macrophage polarization state associated with the culture conditions in which the cells were culture. The single cell macrophage polarization state labels that were used in the training of the machine learning classification model may have been validated for the cell culture as a whole using one or more assays selected from: cytokine release assays, chemokine release assays, cell surface marker assays, and transcriptomics.

The plurality of classes each associated with a different macrophage polarization state may include: a class associated with M0 macrophages, a class associated with M1 macrophages, and a plurality of classes associated with M2 macrophages. The plurality of classes associated with M2 macrophages may be selected from M2a, M2b, M2c and M2d. The plurality of classes associated with M2 macrophages may comprise a class associated with M2a macrophages and a class associated with M2c macrophages.

The optical label free imaging technology may be phase contrast microscopy. Obtaining, by said processor, one or more single cell label-free images obtained using an optical label free imaging technology, may comprise: receiving, by said processor, an optical label free image of a cell culture or portion thereof; and processing, by said processor, the optical label free image of the cell culture using a cell segmentation machine learning model.

The method may further comprise: obtaining, by said processor, one or more single cell fluorescence images each corresponding to a single cell label-free image obtained using an optical label free imaging technology; quantifying, by said processor and for each of the one or more single cell fluorescence image, a plurality of single cell image-derived features, wherein the plurality of single cell image-derived features comprise: one or more intensity features, one or more shape features and one or more texture features. The trained machine learning classification model may be configured to take as input values for the plurality of single cell image-derived features quantified for a single cell label-free image and for a corresponding single cell fluorescence image. The single cell image-derived features quantified for the single cell fluorescence image may be the same as the single cell image-derived features quantified for the single cell image. The trained machine learning classification model may be configured to take as input the concatenation of the plurality of single cell image-derived features quantified for a single cell label free image and the plurality of single cell image-derived features for a corresponding single cell fluorescence image.

Obtaining, by said processor, one or more single cell fluorescence images each corresponding to a single cell label-free image obtained using an optical label free imaging technology may comprise: receiving, by said processor, an optical label free image of a cell culture or portion thereof and a corresponding fluorescence image of the cell culture or portion thereof; processing, by said processor, the optical label free image of the cell culture using a cell segmentation machine learning model, thereby obtaining one or more single cell label-free images; and obtaining, by said processor, a single cell fluorescence image corresponding to each of one or more single cell label-free images by mapping the one or more single cell label-free images to the fluorescence image of the cell culture or portion thereof.

The one or more single cell fluorescence images may comprise signal associated with one or more live cell fluorescent markers and/or reporters, optionally wherein a live cell fluorescent marker is selected from: a F-actin marker, a mitochondrial marker, a nuclear marker, a phagocytosis marker, a cytoplasm marker, and a membrane marker, optionally wherein a live cell fluorescent marker is a F-actin marker. The one or more single cell fluorescence images may be images obtained using fluorescence microscopy or images obtained by providing the one or more single cell label-free images or an optical label free image of a cell culture or portion thereof comprising said single cell label-free images as input to a virtual staining machine learning model.

Obtaining the one or more single cell fluorescence images may comprise providing the one or more single cell label-free images or an optical label free image of a cell culture or portion thereof comprising said single cell label-free images as input to a virtual staining machine learning model, wherein a virtual staining machine learning model is a machine learning model configured to take as input a label-free image of a cell culture or portion thereof obtained using an optical imaging technology and provide as output a corresponding fluorescence image. The virtual staining machine learning model may comprise: a first machine learning model configured to take as input a label-free image of a cell culture or portion thereof obtained using an optical imaging technology and to provide as output a corresponding fluorescence image; and a second machine learning model configured to take as input a label-free image of a cell culture or portion thereof obtained using an optical imaging technology and a corresponding fluorescence image obtained as an output of the first machine learning model, and to provide as output a residual fluorescent image, wherein a residual fluorescent image comprises signal from a corresponding fluorescent image not captured in the output of the first machine learning model. The virtual staining machine learning model may comprise one or more deep neural networks, optionally one or more convolutional neural networks.

The machine learning classification model may be a non-linear classification model. The machine learning classification model may comprise one or more models selected from: a decision tree, random forest, gradient boosted tree, SVM with a non-linear kernel, and an artificial neural network with non-linear activation functions. The machine learning classification model may comprise an ensemble of models whose predictions are combined, optionally a gradient boosted tree model.

An intensity feature may be a feature that quantifies the intensity or distribution of intensity of a signal in a single cell image. The one or more intensity features may be selected from: an image moment, a maximum intensity over the pixels corresponding to the segmented cell, a minimum intensity over the pixels corresponding to the segmented cell, a mean intensity over the pixels corresponding to the segmented cell, a median intensity over the pixels corresponding to the segmented cell, a summed intensity over the pixels corresponding to the segmented cell, and a predetermined percentile of the distribution of intensity over the pixels corresponding to the segmented cell. A shape feature may be a feature that quantifies an aspect of the shape of a segmented cell. The one or more shape features may be selected from: the cell eccentricity, cell extent, cell perimeter, cell solidity, cell area, and area of the cell's convex hull. A texture feature may be a feature that quantifies the perceived texture of a digital image. The one or more texture feature may be selected from: Haralick texture features, and gray co-occurrence statistics.

The plurality of single-cell image derived features may comprise at least 20, at least 30, at least 40, at least 50, at least 60, at least 70, at least 80, at least 90 or about 100 features quantified for each single cell label-free image. The plurality of single-cell image derived features may comprise at least 20, at least 30, at least 40, at least 50, at least 60, at least 70, at least 80, at least 90 or about 100 features quantified for each single cell fluorescence image. The plurality of single-cell image derived features may comprise on or more of: a cell eccentricity feature quantified for each single cell label-free image and/or for each single cell fluorescence image, a cell solidity feature quantified for each single cell label-free image and/or for each single cell fluorescence image, and one or more texture features quantified for each single cell fluorescence image.

The macrophage cell may be a macrophage derived from a pluripotent stem cell, optionally an induced pluripotent stem cell. The macrophage cell may be a human cell.

The method may comprise identifying the macrophage polarization state of one or more macrophage cells in live cell culture at a plurality of time points during a cell culture.

The method may further comprise said processor, using the identified macrophage polarization state of said one or more macrophage cells, optionally at a plurality of time points during a cell culture, determining the value of one or more inflammatory metrics selected from: the speed of polarization into one or more selected macrophage subtypes (e.g. speed of polarization into M1 subtype, speed of polarization into any M2 subtype, speed of polarization into a specific M2 subtype), a polarization dynamics metric, the proportion of cells in a cell culture in one or more selected macrophage subtypes, the ratio of the number or proportion of cells in a cell culture in a first one or more selected macrophage subtypes relative to a second one or more selected macrophage subtypes, a metric indicative of polarization efficiency, a speed of repolarization into one or more selected macrophages subtypes, a repolarization dynamics metric, a number or proportion of cells in one or more selected macrophage subytpes after repolarization, a ratio of the number or proportion of cells in a cell culture in a first one or more selected macrophage subtypes after repolarization relative to a second one or more selected macrophage subtypes, and a metric indicative of repolarization efficiency.

According to a second aspect, there is provided a method of assessing the effect of one or more perturbations on macrophage polarization, the method comprising: obtaining one or more label-free optical images of one or more cell cultures and optionally corresponding fluorescence images, wherein the one or more cell cultures each comprised a population of cells comprising macrophages or macrophage precursor cells exposed to one of the one or more perturbations, and for each perturbation, identifying the macrophage subtype of one or more cells in one or more cell cultures exposed to the perturbation using said images and the method of any embodiment of the first aspect.

The method according to the present aspect may have any of the features disclosed in relation to the first aspect. The method according to the present aspect may have any one or more of the following optional features.

Each perturbation may be selected from: exposure to a compound or composition, genetic perturbation, or environmental condition, and/or wherein the method is for drug screening or high throughput drug safety evaluation and/or wherein the cell population comprises cells that are representative of a disease or disorder associated with macrophage dysfunction.

The method may comprise one or more of: acquiring an image of a cell culture using an optical label free imaging technology, acquiring an image of the cell culture using a fluorescence microscope, culturing a cell population, optionally a monocyte or macrophage population, in conditions suitable for macrophage polarization and/or macrophage cell maintenance. Culturing the cell population may comprise maintaining the cell population in an artificial environment that is compatible with cell viability and with the cell state transition process. The artificial environment may be a cell culture dish, maintained in a live-cell analysis system such as e.g. Incucyte^{®}. The cell culture may be an adherent cell culture, a two-dimensional cell culture, a three-dimensional cell culture, a cell culture in a plate or flask. Label-free images acquired from this type of cell cultures are believed to be more likely to be informative.

The methods described herein are computer-implemented unless context specifies otherwise (such as e.g. where measurement steps and/or wet steps are involved). Thus, the methods described herein are typically performed using a computer system or computer device. Any reference to an action such as "obtaining", "processing", "determining" may therefore refer to a processor performing the action, or a processor executing instructions that cause the processor to perform the action. Indeed, the methods of the present invention comprising at least the processing of images is such that it cannot be performed in the human mind.

The methods may further comprise providing one or more results of the method to a user, for example through a user interface. The results may include: the predicted macrophage polarization state of one or more cells, and/or any information derived therefrom (such as e.g. an inflammatory metric and/or the values of one or more of the image-derived features.

The methods described herein find use in the context of drug screening and safety pharmacology.

According to a third aspect, there is provided a method of providing a trained machine learning model for identifying the macrophage polarization state of one or more macrophage cells in live cell culture, the method including the steps of: (i) obtaining, by a processor, a training data set comprising: a plurality of single cell label-free images obtained using an optical label free imaging technology, each single cell image showing a single live macrophage cell in cell culture, or the values of a plurality of single cell image-derived features obtained by processing said optical images, and optionally, a plurality of single cell fluorescence images corresponding to the plurality of single cell label-free images or values of a plurality of single cell image-derived features obtained by processing said fluorescence images, and a label associated with each of said plurality of single cell label-free images indicating a macrophage polarization state selected from: M0, M1, M2, and a plurality of M2 subtypes, optionally including M2a, M2b, M2c and M2d; and (ii) training, by said processor, a machine learning classification model to identify a macrophage polarization state associated with the single cell images using said training data, wherein the trained machine learning classification model is configured to take as input values for the plurality of single cell image-derived features and classify, using said input, a corresponding single cell between a plurality of classes each associated with a different macrophage polarization state selected from: M0, M1, M2, and a plurality of M2 subtypes optionally selected from M2a, M2b, M2c and M2d.

The method according to the present aspect may have any of the features disclosed in relation to the first aspect. The method of the present aspect may further have any one or any combination of the following optional features. The method may further comprise training a virtual staining machine learning model. The method may further comprise one or more of: providing the trained machine learning classification model to a user, data storage device or computing device, providing the trained virtual staining machine learning model to a user, data storage device or computing device.

The method may comprise training the machine learning classification model using training data comprising, for each of a plurality of training single cell label-free images, values of the plurality of single cell image-derived features and a macrophage polarization state label, wherein the label for a single cell image is derived from the cell culture from which the respective single cell label-free image is obtained, wherein the same label is assigned to each single cell image derived from the same cell culture. The single cell macrophage polarization state labels may be derived from the assumed macrophage polarization state associated with the culture conditions in which the cells were culture. The single cell macrophage polarization state labels may be derived from the assumed macrophage polarization state validated for the cell culture as a whole using one or more assays selected from: cytokine release assays, chemokine release assays, cell surface marker assays, and transcriptomics.

The method may comprise obtaining the single cell label-free images comprised in the training dataset by receiving, by said processor, an optical label free image of a cell culture or portion thereof; and processing, by said processor, the optical label free image of the cell culture using a cell segmentation machine learning model.

The training data may comprise one or more single cell fluorescence images each corresponding to a single cell label-free image, and obtaining the training data may comprise quantifying, by said processor and for each of the one or more single cell fluorescence image, a plurality of single cell image-derived features, wherein the plurality of single cell image-derived features comprise: one or more intensity features, one or more shape features and one or more texture features. Thus, the trained machine learning classification model can be configured to take as input values for the plurality of single cell image-derived features quantified for a single cell label-free image and for a corresponding single cell fluorescence image.

The training data may comprise one or more single cell fluorescence images each corresponding to a single cell label-free image obtained using an optical label free imaging technology, and the method may comprise obtaining said images by receiving, by said processor, an optical label free image of a cell culture or portion thereof (comprising the single cell label-free images comprised in the training data) and a corresponding fluorescence image of the cell culture or portion thereof; processing, by said processor, the optical label free image of the cell culture using a cell segmentation machine learning model, thereby obtaining the single cell label-free images; and obtaining, by said processor, a single cell fluorescence image corresponding to each of one or more single cell label-free images by mapping the one or more single cell label-free images to the fluorescence image of the cell culture or portion thereof.

The single cell fluorescence images comprised in the training data may be images obtained using fluorescence microscopy or images obtained by providing the one or more single cell label-free images or an optical label free image of a cell culture or portion thereof comprising said single cell label-free images as input to a virtual staining machine learning model. Thus, obtaining the training data may comprise obtaining providing the one or more single cell label-free images or an optical label free image of a cell culture or portion thereof comprising said single cell label-free images as input to a virtual staining machine learning model, wherein a virtual staining machine learning model is a machine learning model configured to take as input a label-free image of a cell culture or portion thereof obtained using an optical imaging technology and provide as output a corresponding fluorescence image, thereby obtaining the plurality of single cell fluorescence images comprised in the training data.

According to a fourth aspect, there is provided a system including: at least one processor; and at least one non-transitory computer readable medium containing instructions that, when executed by the at least one processor, cause the at least one processor to perform operations comprising steps of any method described herein, such as e.g. the methods of any embodiment of the first, second or third aspects.

The system according to any aspect described herein may comprise one or more of: a cell culture environment (such as e.g. an incubator), and one or more sensors (such as e.g. one or more label-free imaging devices).

According to a further aspect, there is provided a non-transitory computer readable medium comprising instructions that, when executed by at least one processor, cause the at least one processor to perform the method of any embodiment of any aspect described herein.

According to a further aspect, there is provided a computer program comprising code which, when the code is executed on a computer, causes the computer to perform the method of any embodiment of any aspect described herein.

### Brief Description of the Drawings

Embodiments of the present disclosure will now be described by way of example with reference to the accompanying drawings in which:

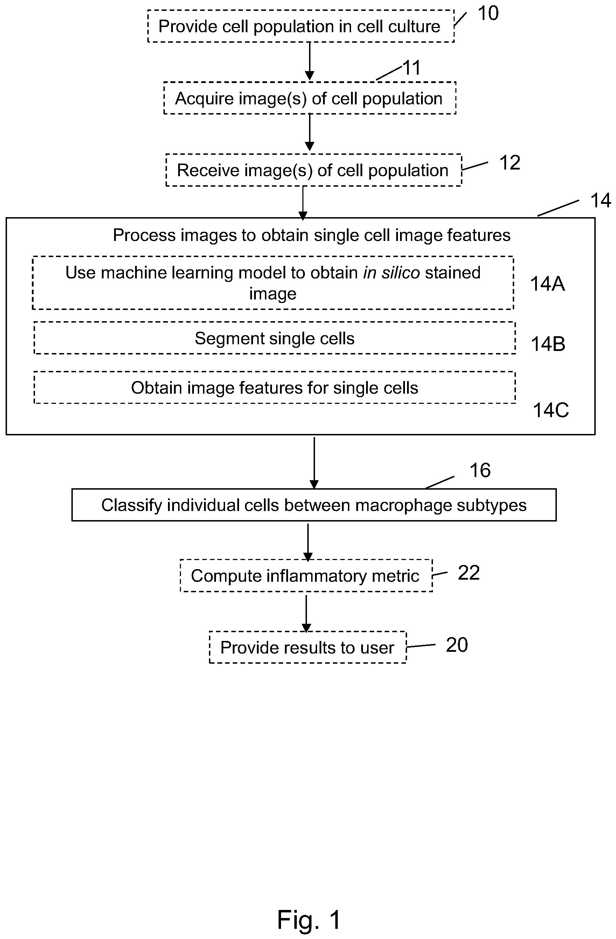

**Figure 1** is a flowchart illustrating a method for identifying the polarization state of a macrophage in live cell culture according to a general embodiment of the disclosure.

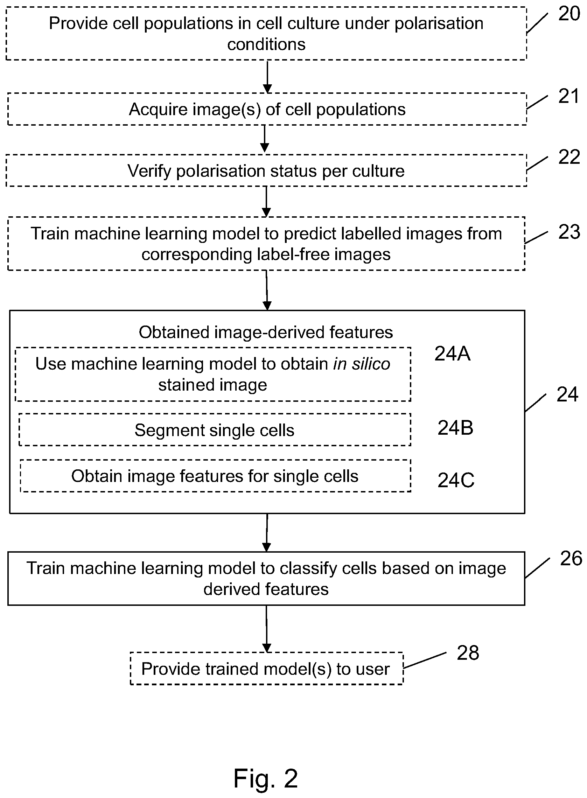

**Figure 2** is a flowchart illustrating a method for providing a tool for identifying the polarization state of a macrophage in live cell culture according to a general embodiment of the disclosure.

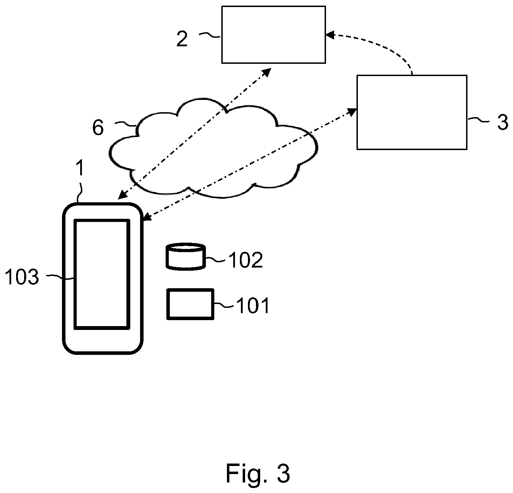

**Figure 3** illustrates schematically an exemplary system according to the disclosure.

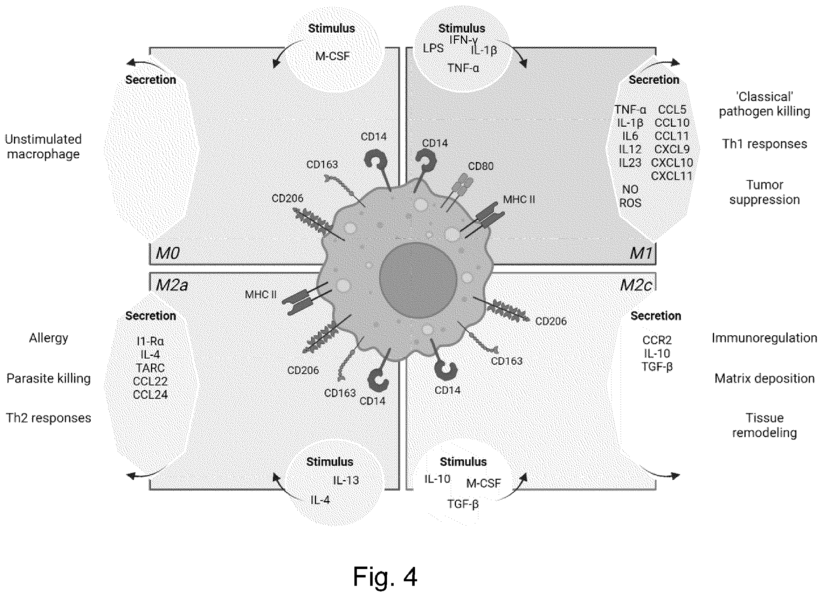

**Figure 4** illustrates schematically the characteristics of four different subtypes of macrophages investigated in examples of the disclosure, together with examples of the various cytokines, bacterial peptides and growth factors used to enable proper polarization, and markers used for their characterisation.

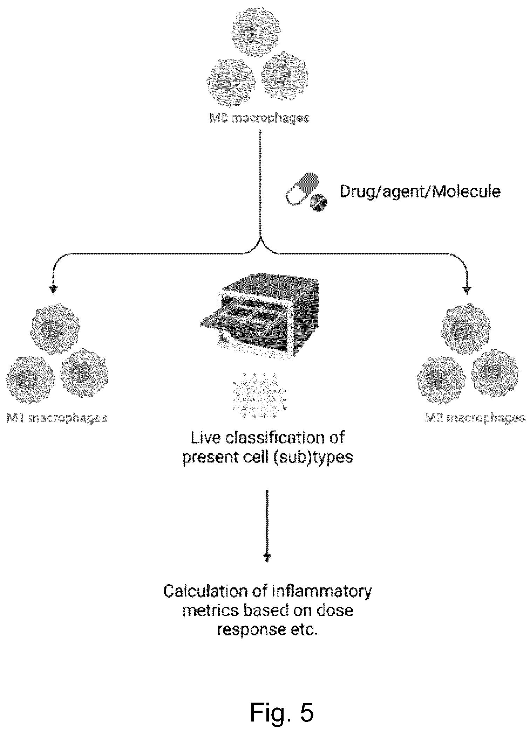

**Figure 5** illustrates schematically a drug screening process according to embodiments of the disclosure.

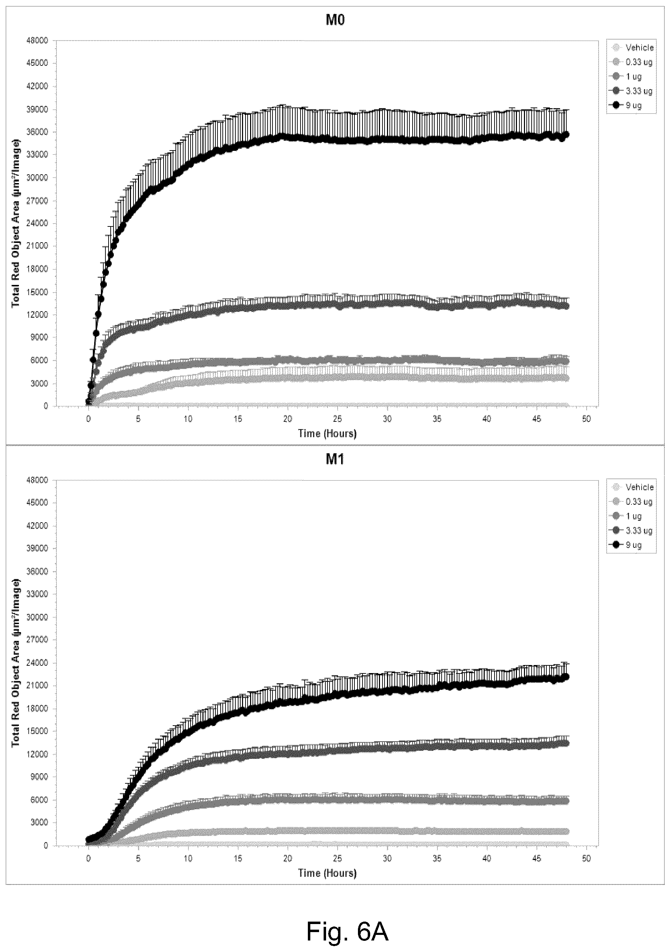

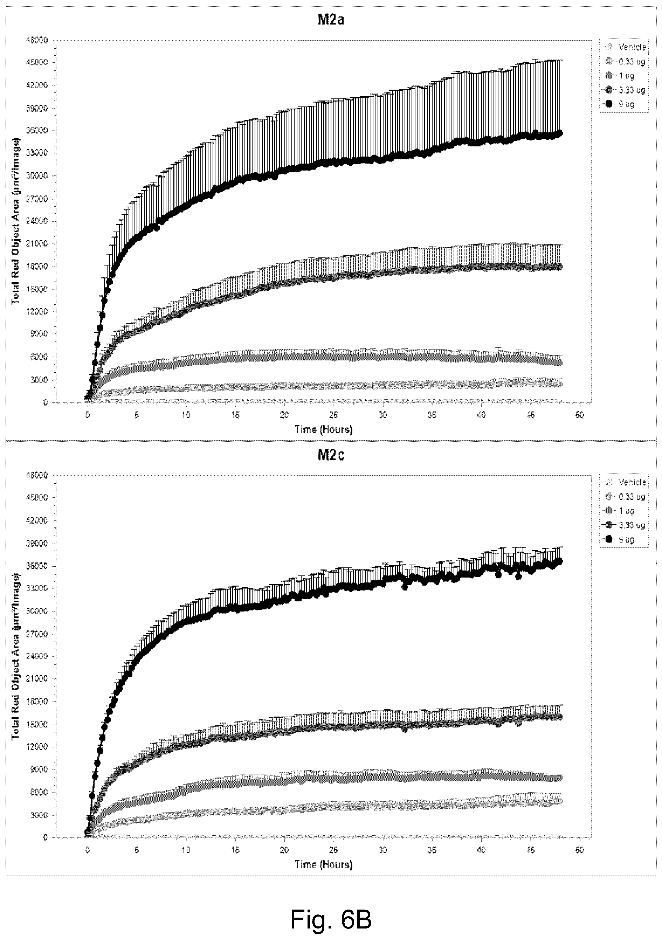

**Figure 6A** **and** **6B** show data demonstrating that all four *in vitro* polarised macrophages subtypes obtained in examples of the disclosure exhibit phagocytic activity. Polarized cells are incubated with various concentrations of S. aureus particles and red fluorescent signal increases in a time- and dose-dependent manner for all four subtypes meaning they are functional macrophages. **A.** M0 macrophages (top) and cell cultures subject to polarization conditions for M1 macrophages (bottom). **B.** Cell cultures subject to polarization conditions for M2a macrophages (top) and cell cultures subject to polarization conditions for M2c macrophages (bottom).

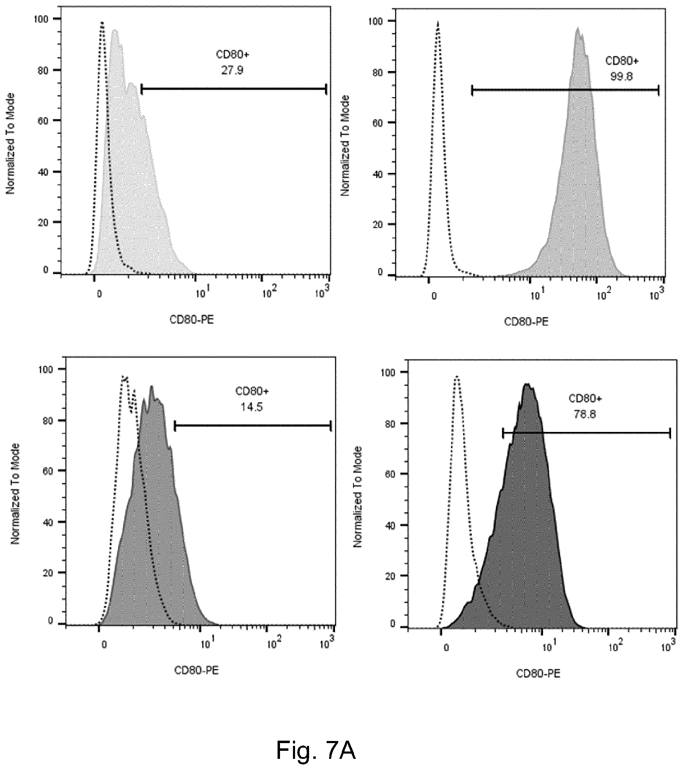

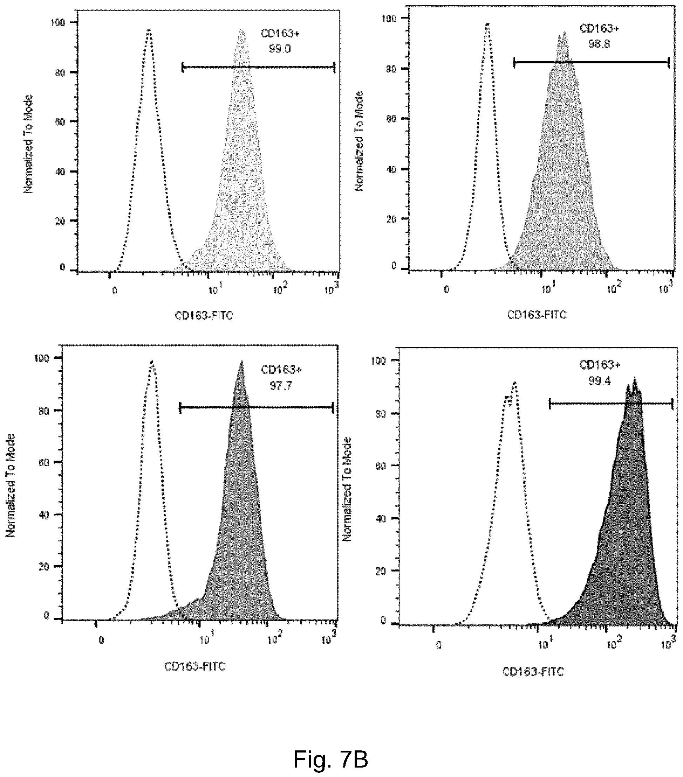

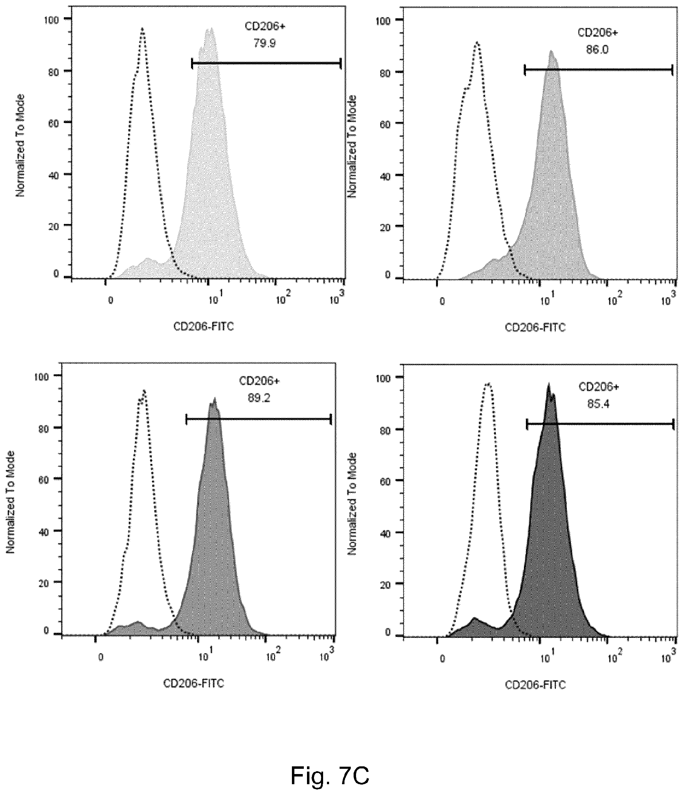

**Figure 7A****, B and C** show flow cytometry data about expression of the macrophage markers CD80 (**A**), CD163 (**B**) and CD206 (C) on 48 hour polarized macrophages. Each plot shows the data for M0 (top left), M1 (top right), M2a (bottom left) and M2b (bottom right) cells. The data show overlap between different subtypes. CD80 expression is highest in M1 macrophages, but also expressed in M0, M2a and M2c subtypes. CD163 is expressed throughout all macrophage subtypes, but with the highest intensity in M2c macrophages. CD206 is equally expressed in all 4 subtypes.

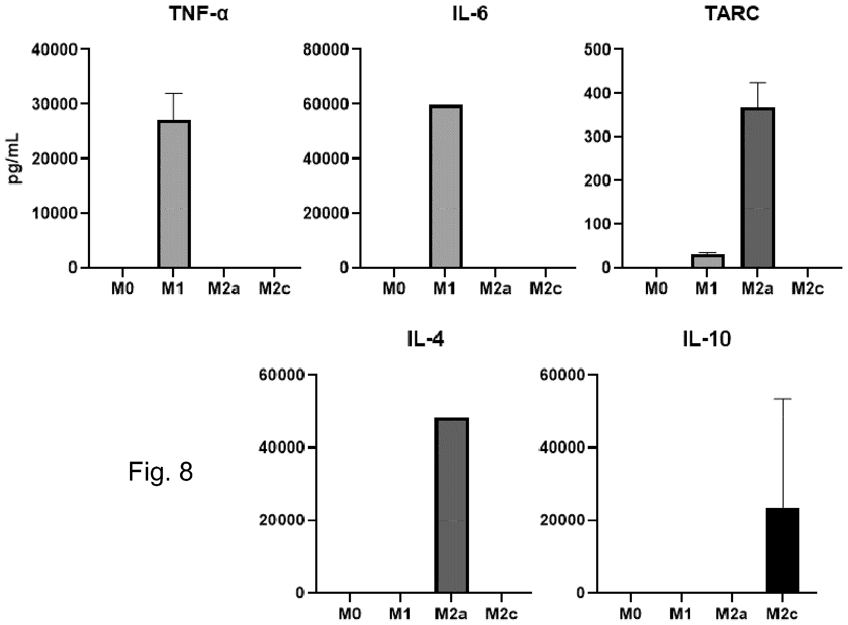

**Figure 8** shows data for cytokine secretion in cell culture supernatant measured using cytokine and chemokine release assays. Upon 48 hours polarization TNF-α and IL-6 is secreted solely by M1 macrophages. TARC and IL-4 secretion is specific for M2a macrophages and the M2c subtype selectively secretes IL-10 confirming the macrophage subtypes selectively secrete cytokines.

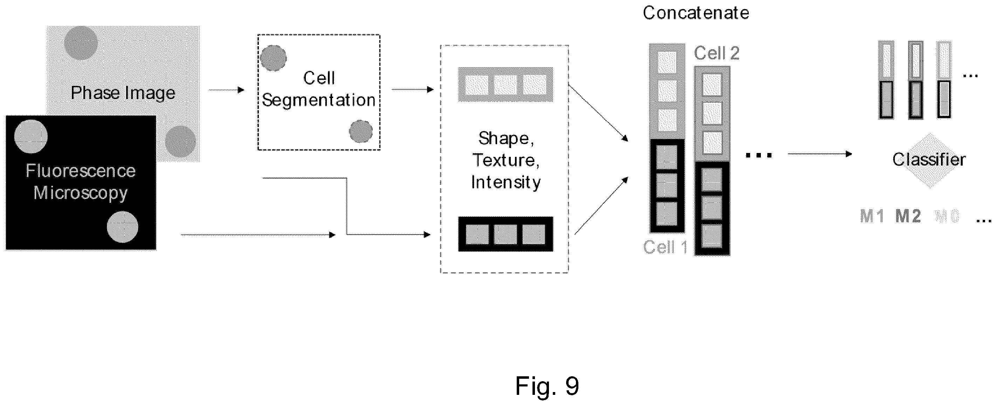

**Figure 9** illustrates schematically a feature extraction and classification pipeline implemented in examples of the disclosure. Macrophage cells are delineated in the phase contrast images using a standard segmentation model. The masks thus obtained are then used to extract morphological (shape and texture) features from each separate cells. Using the well-of-origin label (i.e. which well each individual cell came from), a classifier is trained to predict the polarization of macrophages from the morphological features.

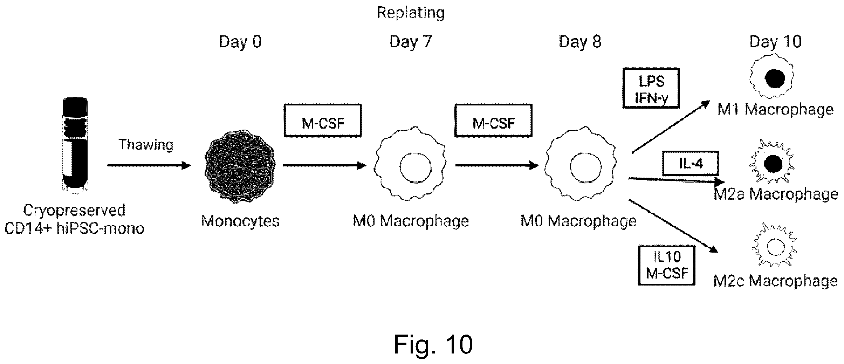

**Figure 10** illustrates schematically a process used in examples of the disclosure to obtain polarised macrophages. Cryopreserved CD14+ hiPSC-derived monocytes are thawed in IF9S supplemented with 80 ng/mL M-CSF to enable further differentiation to naive M0 macrophages in 7 days. Subsequently, cells are replated and 24 hours later polarized to M1 macrophages using 10 ng/mL LPS + 20 ng/mL IFN-γ, 20 ng/mL IL-4 to generate M2a macrophages and 80 ng/mL M-CSF + 10 ng/mL IL-10 was used to polarize to the M2c subtype. Cells were fully polarized in 48 hours.

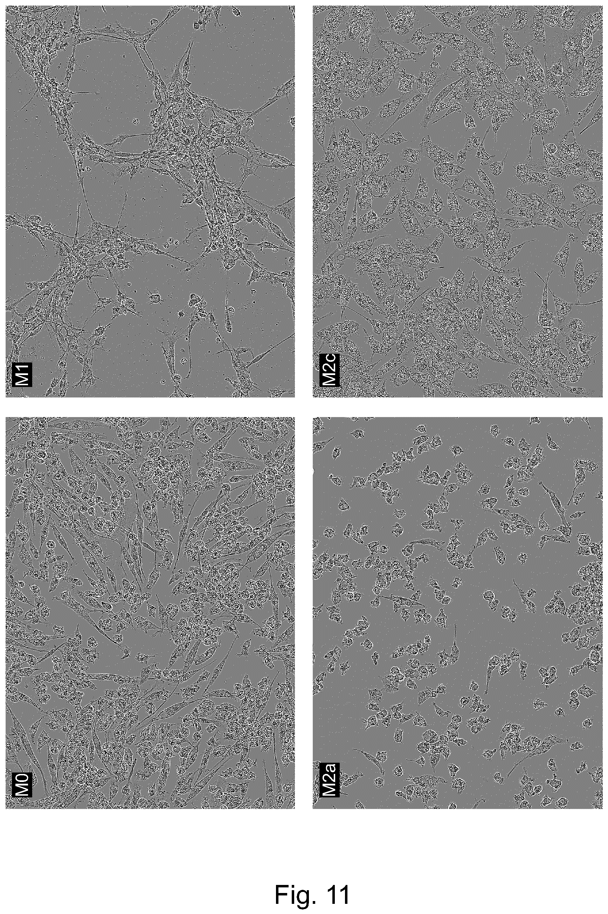

**Figure 11** shows phase contrast images illustrating macrophage subtype morphology after 48 hours of polarization using the protocol described by reference to Figure 10. Macrophages are polarized using 10 ng/mL LPS + 20 ng/mL IFN-γ to generate M1 macrophages, M2a macrophages are polarized using 20 ng/mL IL-4, 80 ng/mL M-CSF + 10 ng/mL IL-10 is used to polarize to the M2c subtype for 48 hours. Representative images acquired with a 20x objective. M0 macrophages have an elongated morphology. M1 polarized macrophages have a stellar shaped morphology with protrusions. Polarization to M2a macrophages resulted in more rounded cells and M2c macrophages are a mixture of elongated and rounded cells with vacuoles.

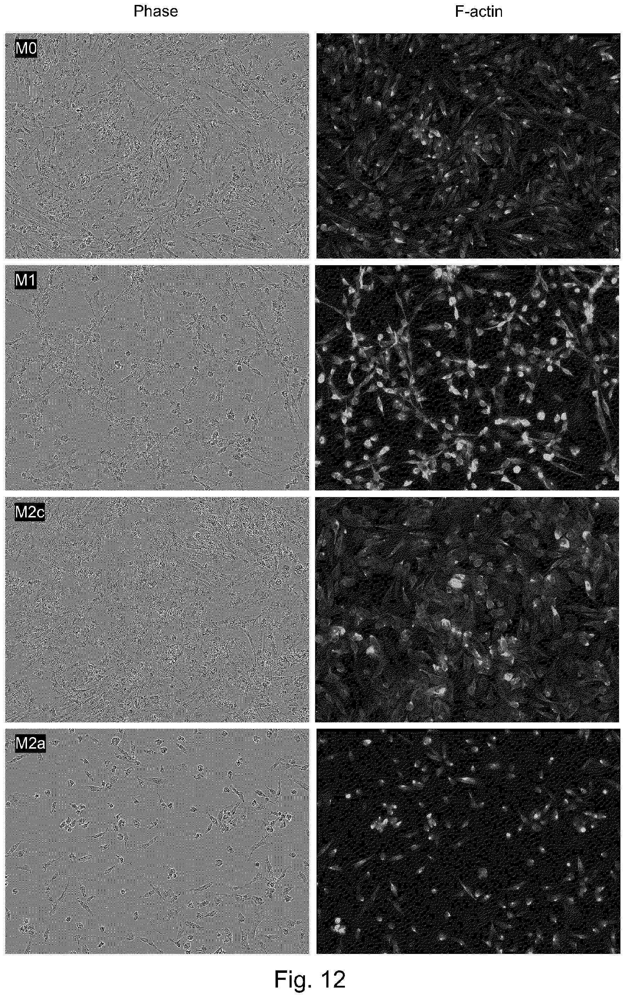

**Figure 12** shows phase contrast and corresponding fluorescence F-actin staining images used in examples of the disclosure. Naive M0 macrophages are stained with 1x CellMask Green Actin Tracking dye at the start of polarization to visualize alterations in F-actin distribution over time. Images depicted show phase images and F-actin localization 48 hours post polarization.

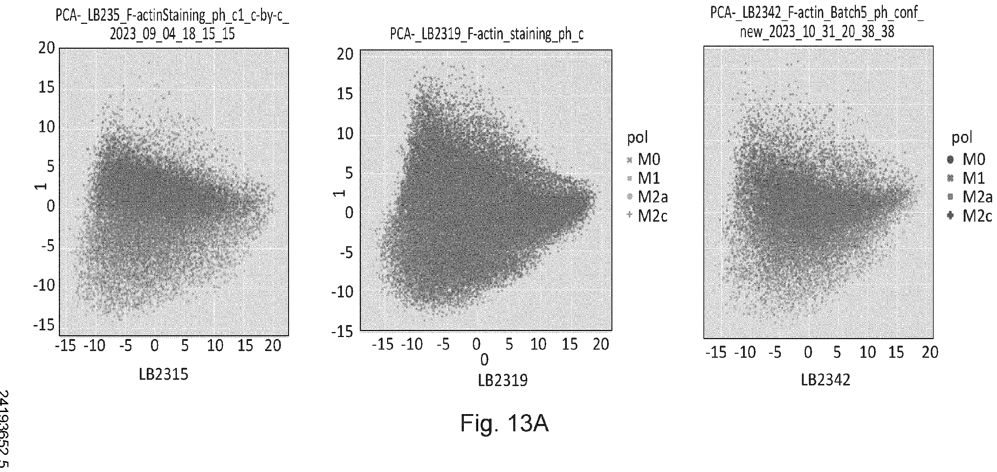

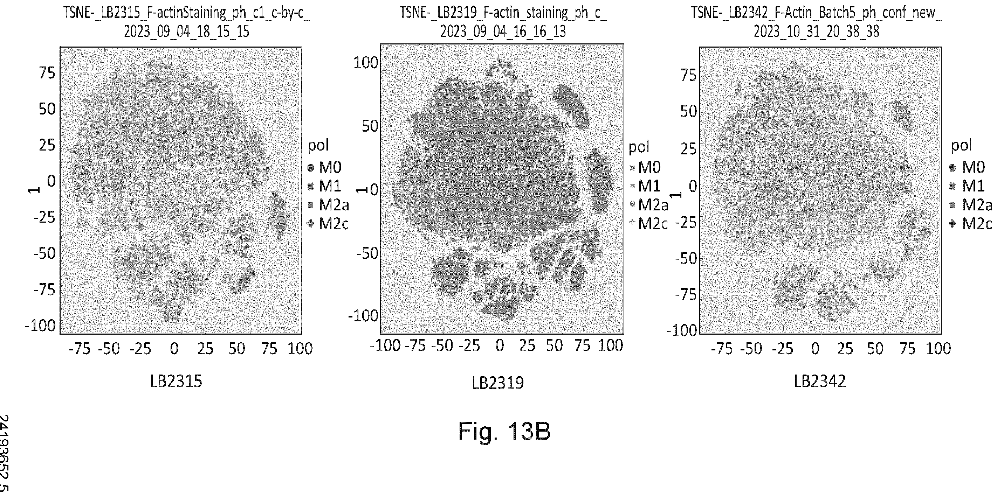

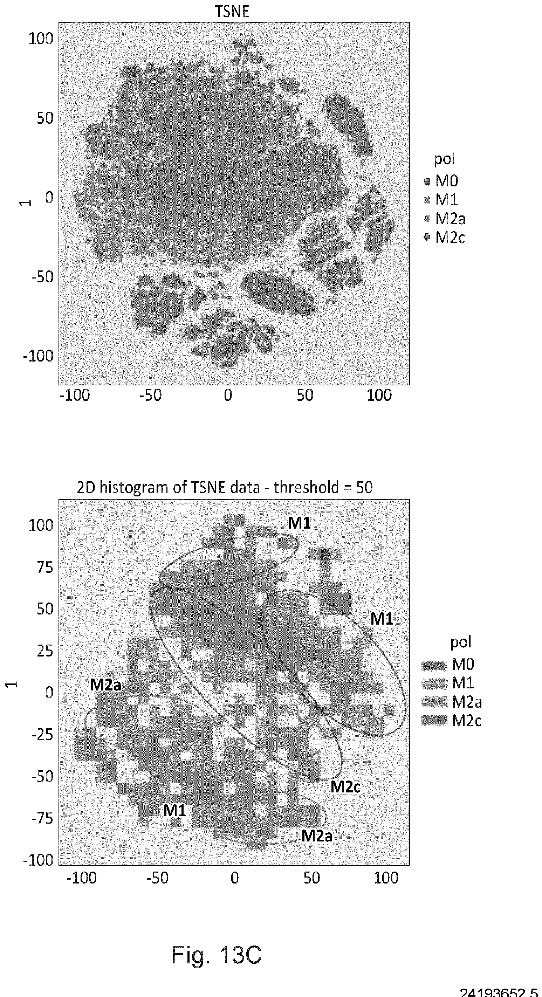

**Figures 13A****, B and C** show dimensionality reduced feature sets calculated for different macrophage subtypes, in 3 different batches of polarization experiments. (**A**) PCA of features for the different batches, with each marker corresponding to one single cell. The colour indicates the cell polarization (determined by well of culture). (**B**) tSNE plots of the same features, revealing regions of feature space with higher prevalence of different polarizations in the manifold. Same colours as in A. (**C**). Data from (B) for one of the batches (labelled LB2319 on (A) and (B)) with tSNE thresholded to show the separation of different macrophage polarizations Top: tSNE plot of features of 73787 cells. Plotting all cells reveals some overlap in feature space but looking at what is the most frequent cell in each region of the feature space (thresholded tSNE on the right) shows that the features give separation to the different polarizations.

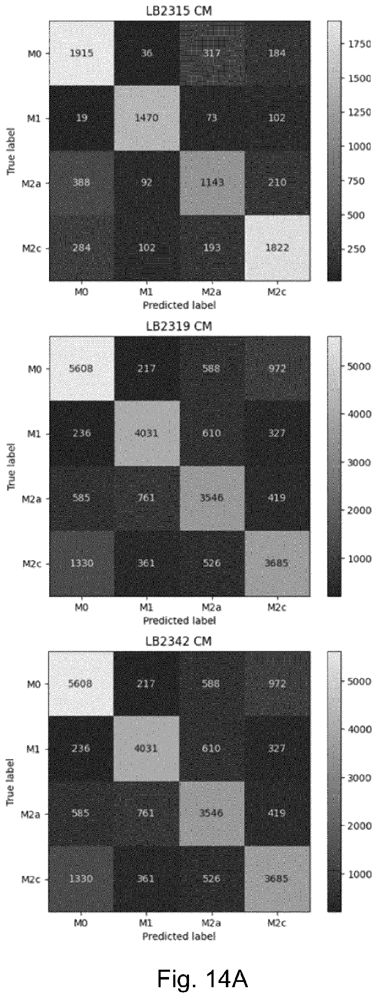

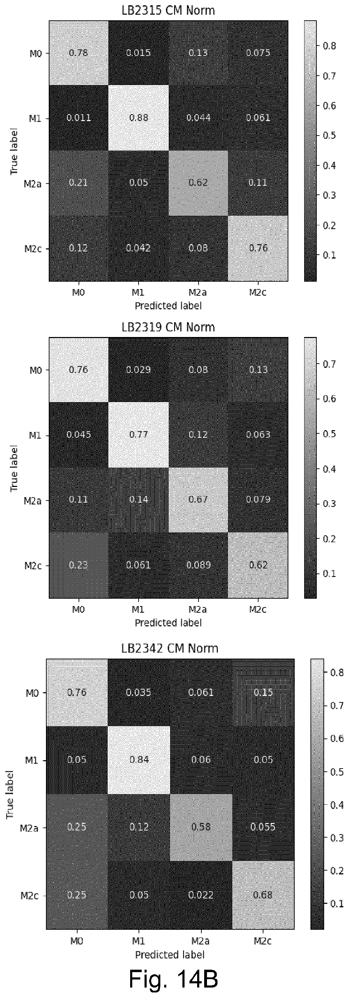

**Figures 14A** **and** **14B** show confusion matrices for classification of macrophage polarization for the three batches. **A** shows the cell counts in each category. **B** contains normalised data and shows the true positive rate along the diagonal and the false classification rates for each other polarization. The specificity is lower for M2a and M2c compared to M0 and M1 across the three batches.

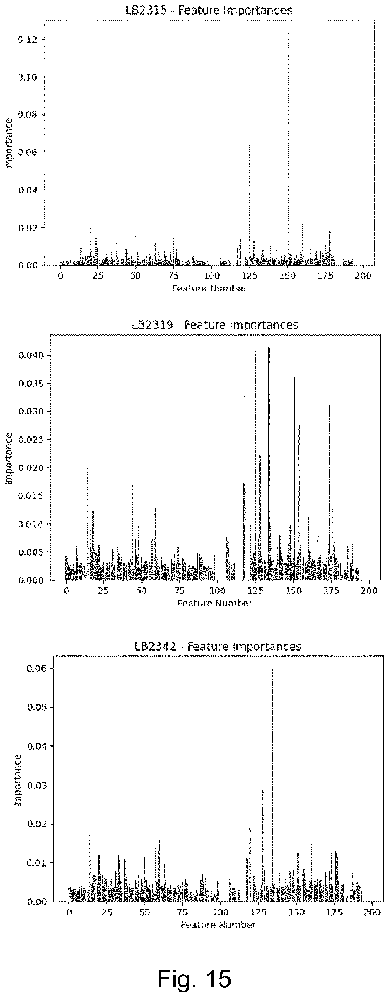

**Figure 15** shows feature importance plots for the classifier used to obtain the results in Figure 14. The feature importance, as determined by the sum across each node activation within each tree, averaged across all trees, is shown for the three batches separately. The activation is determined by the reduction in error (log loss) associated by selecting a certain input variable (feature) at each node and splitting the region of feature space inherited from upstream nodes according to that variable.

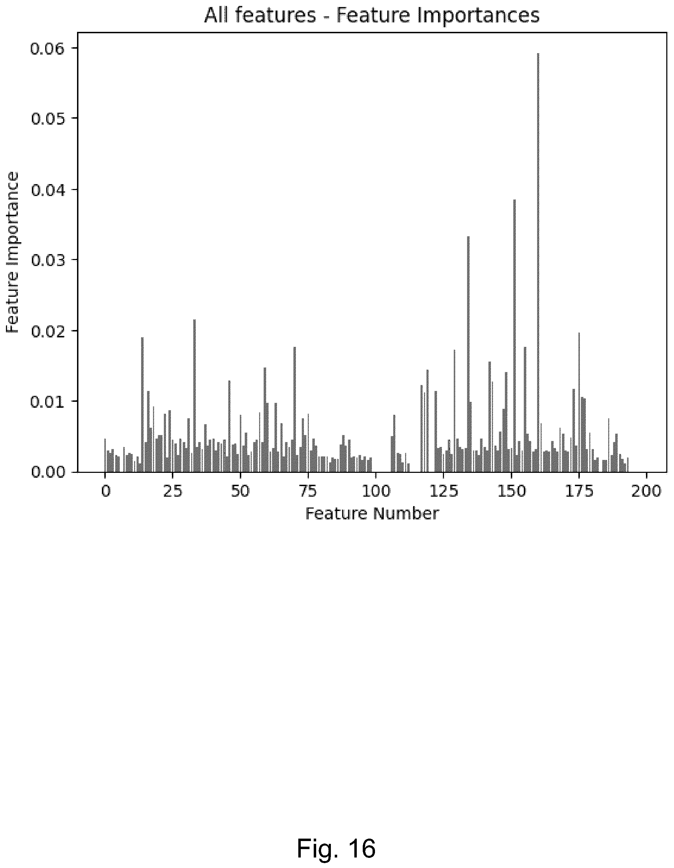

**Figure 16** shows a feature importance plot for the classifier used to obtain the results in Figure 14. The feature importance, as determined by the sum across each node activation within each tree, averaged across all trees, is shown for prediction across all batches together.

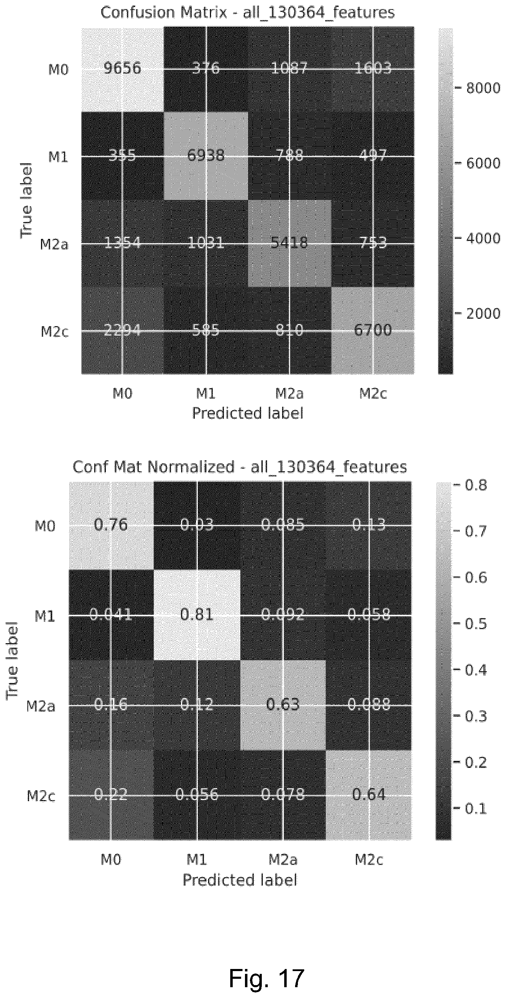

**Figure 17** shows confusion matrices for classification of macrophage polarization across three batches. Top shows the cell counts in each category. Bottom contains normalised data and shows the true positive rate along the diagonal and the false classification rates for each other polarization.

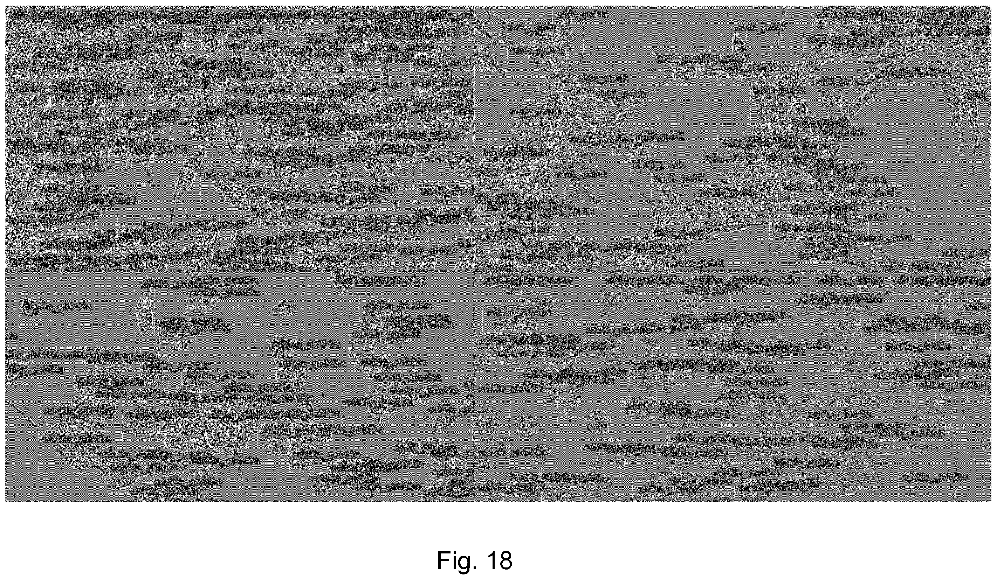

**Figure 18** shows examples of classification outputs for M0 (upper left), M1 (upper right), M2a (lower left) and M2c (lower right) macrophages. Each picture is a well where all macrophages were stimulated to differentiate into one single polarization. Each bounding box is labelled in the following format "c:PredictedPolarization_g:TruePolarization" and represents the prediction for an individual cell within the well.

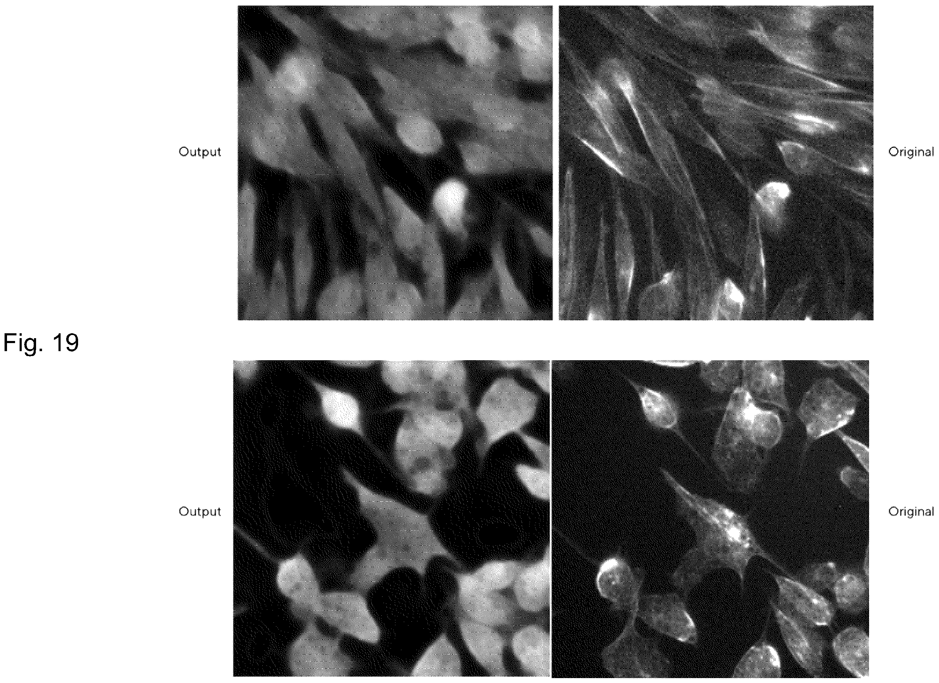

**Figure 19** shows exemplary results of an *in silico* F-actin staining method. Images on the left are outputs of a virtual staining deep neural network predicting F-actin staining from phase contrast images, and images on the right are the corresponding ground truth F-actin staining images.

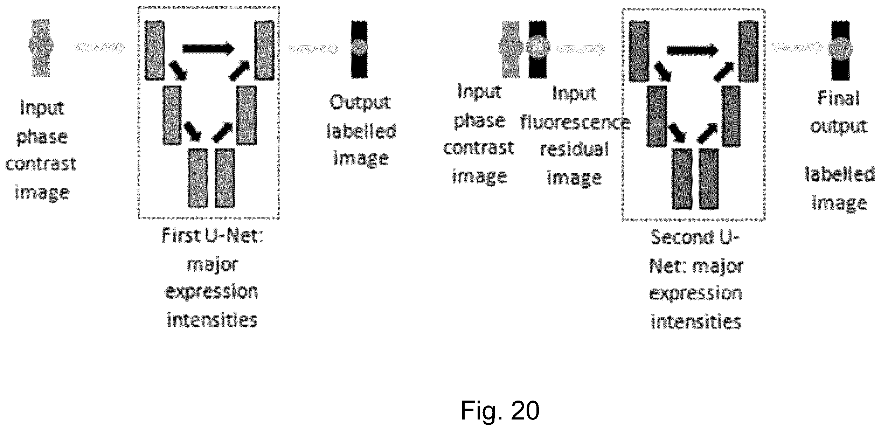

**Figure 20** illustrates a two-step *in silico* labelling process, where a first U-Net is trained to capture the overall intensity levels, and a second U-Net is trained on the phase contrast image and the residual image (subtraction of the first output labelled image from the original f-actin image) to compensate for the missing details.

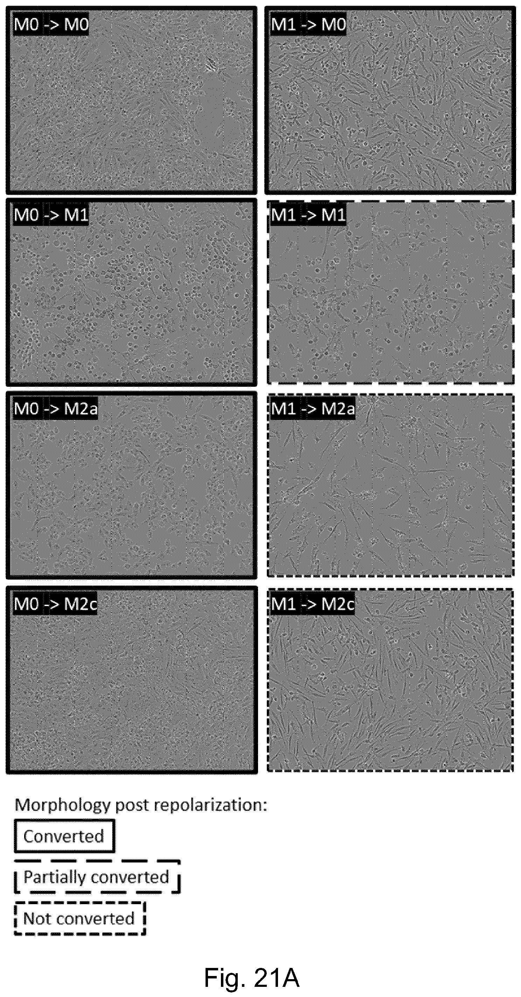

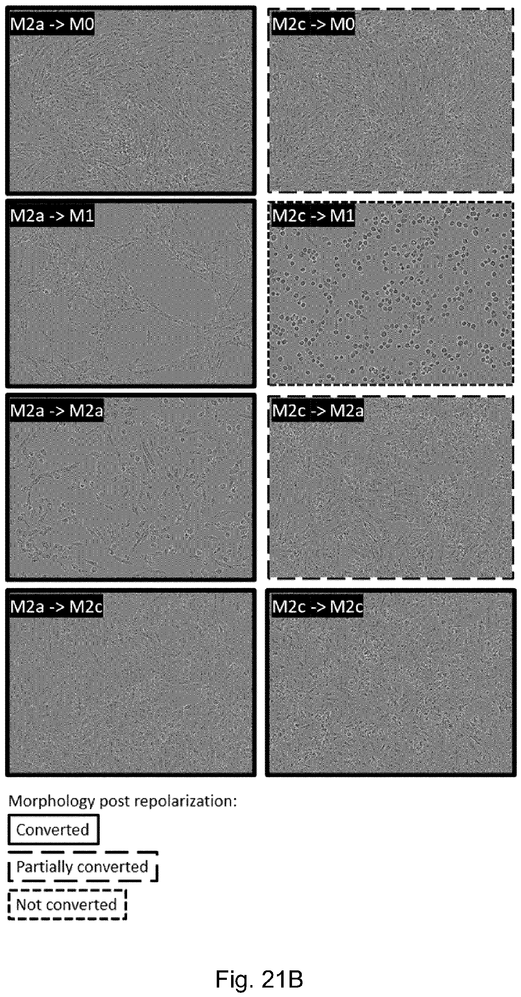

**Figure 21A** **and** **21B** show results of macrophage repolarization assays, in terms of cell morphology on phase contrast images. Macrophages differentiated into different subtypes were exposed to culture media containing the stimuli to convert the cells to M0, M1, M2a or M2c macrophages, evaluating the plasticity of these cells.

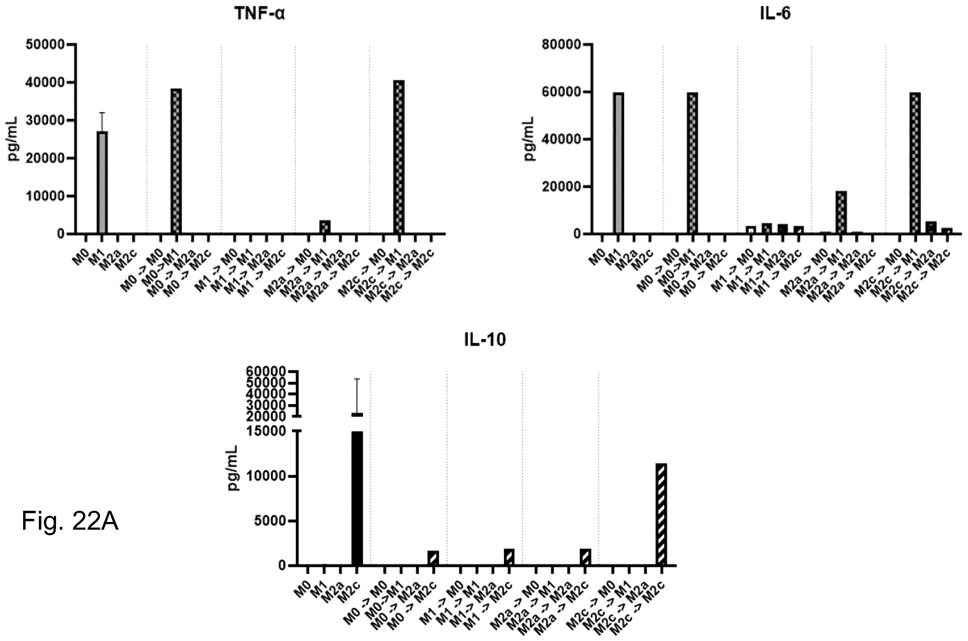

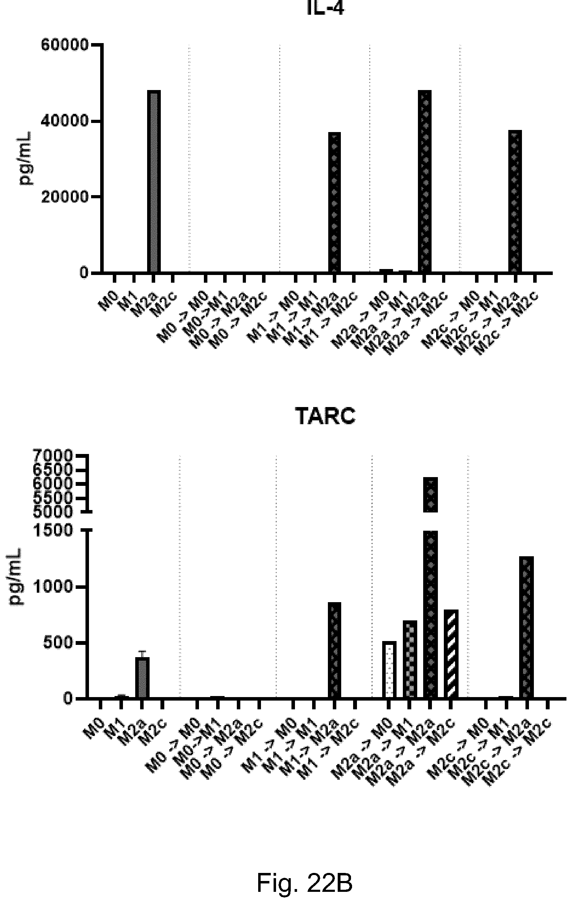

**Figures 22A** **and** **22B** show results of macrophage repolarization assays, in terms of cytokine and chemokine secretion. Macrophages polarised to M1 and M2 subtypes exhibit plasticity and are able to retain or convert between subtypes depending on the stimuli-containing culture media. Thus, in these experiments, after polarisation, factors are added to retain them in the subtype they were polarised to (e.g. M1 -> M1) or to convert them to a different subtype (e.g. M1 -> M2a). Upon conversion (repolarization), macrophages secrete cytokines specific for their subtypes. Cells repolarized to the M1 subtype are shown to secrete the pro-inflammatory cytokines TNF-α and IL-6. For cells repolarized to the M2a subtype, IL-4 and TARC are secreted in all conditions except from M0 to M2a. For cells repolarized to M2c, IL-10 is secreted.

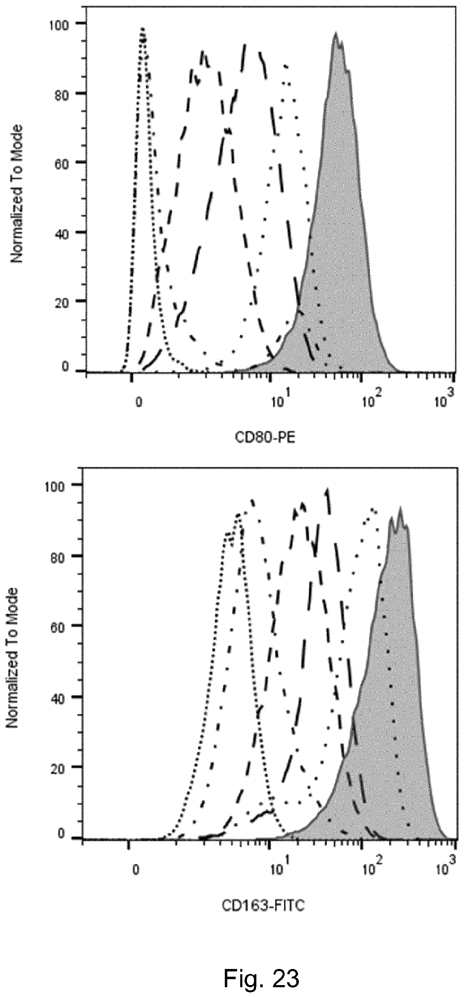

**Figure 23** shows results of macrophage repolarization assays, in terms of cell surface marker measured by flow cytometry. Upon repolarization flow cytometry was performed to measure the expression of the cell surface markers CD80 and CD 163.

Where the figures laid out herein illustrate embodiments of the present invention, these should not be construed as limiting to the scope of the invention. Where appropriate, reference numerals will be used in different figures to relate to the same structural features of the illustrated embodiments.

### Detailed Description

Specific embodiments of the invention will be described below with reference to the figures. The disclosure provides methods of identifying the polarization state of a macrophage in live cell culture, using a machine learning classifier based on single cell image-derived features.

A cell culture refers to a bioprocess whereby live cells are maintained in an artificial environment such as a cell culture dish or vessel. A cell culture dish or vessel may be a plate, a flask, a bioreactor or any other type of container that is compatible with the acquisition of label-free images of a cell culture while the cell culture is underway, preferably without sampling of the cell culture. In embodiments, samples of the cell culture may be obtained to acquire label-free images, and the cells may be returned to the culture. When the sample represents a small amount compared to the size of the overall culture (e.g. less than 5% of the cells), the cells may not be returned to the culture. The methods and systems described herein are applicable to bioprocesses that use any types of cells that can be maintained in culture, whether eukaryotic or prokaryotic. In embodiments, the cells are eukaryotic cells, preferably animal cells. In embodiments, the cells are mammalian cells. In embodiments, the cells are pluripotent cells, such as embryonic stem cells, adult stem cells, or induced pluripotent stem cells. The cells may be cultured in suspension or on a support (such as e.g. surface of the dish, microcarrier, etc.).

As used herein, the terms "computer system" or "computer device" includes the hardware, software and data storage devices for embodying a system or carrying out a computer implemented method, such as e.g. for printing a 3D object as part of a 3D printing system. For example, a computer system may comprise one or more processing units such as a central processing unit (CPU) and/or a graphical processing unit (GPU), input means, output means and data storage, which may be embodied as one or more connected computing devices. Preferably the computer system has a display or comprises a computing device that has a display to provide a visual output display (for example in the design of the business process). The data storage may comprise RAM, disk drives or other computer readable media. The computer system may include a plurality of computing devices connected by a network and able to communicate with each other over that network. For example, a computer system may be implemented as a cloud computer. The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

The disclosure relates to methods of identifying the polarization state of a macrophage in live cell culture. The "polarization state", also referred to herein as "subtype", "polarization status" or simply "polarization" of a macrophage refers to functional phenotype that is currently displayed by the macrophage, classified according to recognized categories (also referred to herein as "subtypes") M0, M1, M2, and subtypes of M2 macrophages such as M2a, M2b, M2c and M2d macrophages. M1 and M2 macrophages can also be referred to as activated macrophages. M1 macrophages can also be referred to as pro-inflammatory macrophages. M2 macrophages can also be referred to as anti-inflammatory macrophages. Macrophage subtypes are associated with distinct patterns of secretion of cytokines and chemokines, as well as expression of different subsets of cell surface markers. An M0 macrophage refers to an unpolarized or resting macrophage. M0 macrophages are obtained by differentiation of monocytes, for example by exposure to M-CSF (macrophage colony stimulating factor), in the absence of pro-inflammatory factors that induce polarization. M0 macrophages may be characterized by the absence of secretion of cytokines and chemokines characterizing other subtypes, and/or the expression of cell surface markers CD163, CD14 and/or CD206. M1 macrophages can be obtained from M0 macrophages by exposure to IFN-γ and LPS. M1 macrophages can be obtained from M0 macrophages by exposure to one or more of LPS, TNF-α, and IL-1β. M1 macrophages may be characterised by the secretion of one or more pro-inflammatory cytokines and/or chemokines, such as TNF-α, IL-6, IL-1β, IL12, IL23, CCL5, CCL10, CCL11, CXCL9, CXCL10, and CXCL11. M1 macrophages may also produce nitric oxide (NO) and/or reactive oxygen species (ROS). M1 macrophages can be characterised by the expression of one or more cell surface markers selected from CD14, CD80, and MHC-II. M2a macrophages can be obtained from M0 macrophages by exposure to IL-4 and/or IL-13. M2a macrophages can be obtained from M0 macrophages by exposure to IL-4. M2a macrophages can be characterised by the secretion of one or more of IL-4, I1-Rα, CCL22, CCL24, and CCL17 (TARC). M2a macrophages can be characterised by the expression of one or more cell surface markers selected from MHC-II, CD206, CD163 and CD14. M2c macrophages can be obtained from M0 macrophages by exposure to M-CSF and one or more of IL-10 and TGF-β. M2c macrophages can be obtained from M0 macrophages by exposure to M-CSF and IL-10. M2c macrophages can be characterised by the expression of one or more of IL-10, TGF-β, CCL16, CCR2 and CCL18. M2c macrophages can be characterised by the expression of one or more cell surface markers selected from CD14, CD163 and CD206. M2b macrophages can be obtained from M0 macrophages by exposure to immune complex, Toll-like receptor (TLR) ligands and/or IL-1β. M2b macrophages can be characterised by the secretion of both pro- and anti-inflammatory cytokines, such as one or more of TNF-α, IL-1β, IL-6, and IL-10. M2d macrophages can be obtained from M0 macrophages by exposure to TLR agonists. M2d macrophages can be characterised by the secretion of IL-10 and/or vascular endothelial growth factors (VEGF).

Embodiments of the present disclosure can classify macrophages between a plurality of classes corresponding to M0, M1 and M2 macrophages, respectively. Embodiments of the present disclosure can classify macrophages between a plurality of classes comprising a class of M0 macrophages, a class of M1 macrophages and one or more classes of M2 macrophages. Embodiments of the present disclosure can classify macrophages between a plurality of classes comprising a class of M0 macrophages, a class of M1 macrophages and a plurality of classes of M2 macrophages. The plurality of classes of M2 macrophages can include classes selected from: a class of M2a macrophages, a class of M2b macrophages, a class of M2c macrophages, and a class of M2d macrophages. The plurality of classes of M2 macrophages can include a class of M2a macrophages, and a class of M2c macrophages. The plurality of classes of M2 macrophages can further include a class of M2b macrophages and/or a class of M2d macrophages. The plurality of classes of M2 macrophages can include: a class of M2a macrophages, a class of M2b macrophages, a class of M2c macrophages, and a class of M2d macrophages.

Embodiments of the present disclosure make use of pluripotent stem cells (PSC), in particular induced pluripotent stem cells (iPSC), to obtain monocytes that are then differentiated into macrophages, which can themselves be polarized into desired polarization states for the purpose of training machine learning models as described herein, or exposed to any perturbation to be assessed for its effect on macrophage polarization using a method as described herein. Any protocol for obtaining macrophages and polarised macrophages from PSC known in the art can be used in the context of the present disclosure. In embodiments, macrophages and/or polarized macrophages are obtained using the methods described in the examples section below. In the context of the present disclosure, a cell may be a vertebrate cell, optionally a mammalian cell, such as a human cell, or a model animal cell such as a mouse, rabbit, monkey or rat cell.

The disclosure relates in parts to the prediction of one or more inflammatory metrics derived from the identification of macrophage subtypes in a live population of cells in culture. An inflammatory metric can be selected from: the speed of polarization into one or more selected macrophage subtypes (e.g. speed of polarization into M1 subtype, speed of polarization into any M2 subtype, speed of polarization into a specific M2 subtype), a polarization dynamics metric, the proportion of cells in a cell culture in one or more selected macrophage subtypes, the ratio of the number or proportion of cells in a cell culture in a first one or more selected macrophage subtypes relative to a second one or more selected macrophage subtypes, a metric indicative of polarization efficiency, and any of the above metrics as applied to repolarization (e.g. speed of repolarization into one or more selected macrophages subtypes, repolarization dynamics metrics, proportions of cells in one or more selected macrophage subytpes after repolarization, ratio of the number or proportion of cells in a cell culture in a first one or more selected macrophage subtypes after repolarization relative to a second one or more selected macrophage subtypes, and a metric indicative of repolarization efficiency). A speed of polarization into one or more selected macrophages subtypes may be quantified as the time at which a predetermined percentage or number of cells in the cell culture is polarised into the one or more selected macrophages subtypes. A metric indicative of polarization dynamics may be selected from: a number or proportion of cells in a cell culture in one or more selected macrophage subtypes after a predetermined period of time, a rate of change of the number or proportion of cells in a cell culture in one or more selected macrophage subtypes, a rate of change of the number or proportion of cells in a cell culture in one or more selected macrophage subtypes between a first predetermined time point and a second predetermined time point, a change in the rate of change of the number or proportion of cells in a cell culture in one or more selected macrophage subtypes, and a change in the rate of change of the number or proportion of cells in a cell culture in one or more selected macrophage subtypes between a first predetermined time point and a second predetermined time point. A metric indicative of polarization efficiency may be selected from: a metric indicative of the presence and/or amount of one or more inflammatory markers in a polarised or repolarised cell culture, a metric indicative of the presence and/or amount of one or more inflammatory markers in a polarised or repolarised cell culture normalised by the number of cells in the cell culture, and a metric indicative of the presence and/or amount of one or more inflammatory markers in a polarised or repolarised cell culture normalised by the number of cells in the cell culture in one or more selected macrophage subtypes. The one or more inflammatory markers may be selected from inflammatory chemokines and cytokines. The metric indicative of the presence of inflammatory markers may be obtained as a cell culture level readout (e.g. cell culture positive or negative for the presence of the one or more markers), or as a single cell level readout (e.g. cells positive or negative for the presence of the one or more markers). cytokines. The metric indicative of the presence of inflammatory markers may be obtained as a cell culture level readout (e.g. a quantitative readout of the cell culture level of the one or more markers), or as a single cell level readout (e.g. a quantitative readout of the level of the one or more markers).

The methods described herein use features derived from images of macrophage cell cultures obtained using label-free optical imaging technologies. Optical imaging technologies suitable for use according to the present disclosure include optical microscopy such as phase contrast microscopy and bright-field microscopy. The features derived from images of cell cultures obtained using label-free optical imaging technologies are referred to herein as "label-free image-derived features". Embodiments of the disclosure additionally use features derived from signals associated live cell fluorescent markers and/or reporters. In embodiments, a live cell fluorescent marker is selected from: a F-actin marker (such as e.g. CellMask Green Actin Tracking Stain), a mitochondrial marker (such as e.g. Biotracker 488, Incucyte^{®} MMP Orange), a nuclear marker (e.g. Nuclight rapid red dye, mEGFP-tagged Histone H2B type 1-J), a phagocytosis marker (e.g. pHrodo^{®} S. aureus Bioparticles), a cytoplasm marker (e.g. Incucyte^{®} Cytolight), a cell membrane marker, a marker of any other organelle or subcellular structure and a genetically encoded macrophage marker (e.g. a genetic reporter that labels cells expressing a specific macrophage marker). In embodiments, a live cell fluorescent marker is a F-actin marker. A marker may be a dye or stain or may be genetically encoded (i.e. a genetic reporter). These signals are referred to herein as "fluorescent images", "stained fluorescent images", "labelled images" or "stained images", and the associated features may be referred to as "fluorescent image-derived features". The stained images may be obtained using fluorescent microscopy, or may be obtained using a virtual staining method, also referred to herein as *"in silico* labelling". A virtual staining method comprises the use of one or more trained machine learning models to obtain one or more stained images using as input a corresponding label-free image. In other words, a stained image and/or associated image-derived features can be obtained using one or more machine learning models that have been trained in a supervised manner to predict a signal associated with a marker of interest (e.g. a fluorescence light microscopy signal associated with a fluorescently tagged marker of interest), based on an input label-free image. In the context of the present disclosure the label free image is typically the same image used to obtain the label-free image-derived features, i.e. an optical microscopy image such as a phase contrast image. Thus, the stained images and associated image features may also be obtained using a label-free optical imaging technologies. The one or more machine learning models used for the virtual staining method can include any model suitable for use in an image-to-image translation task, such as a model trained to predict fluorescent labels signals from label-free images (e.g. Christiansen et al. 2018). The one or more machine learning models used for the virtual staining are typically deep neural networks, such as convolutional neural networks (including e.g. U-nets, V-nets and derivatives) or autoencoders (e.g. variational autoencoders), and models derived therefrom such as generative adversarial network (GAN) comprising a CNN as generator and discriminator. In embodiments, the one or more machine learning models used for the virtual staining method comprise a first machine learning model trained to predict a fluorescent image from a label-free image (i.e. trained to take as input a label-free image and provide as output a corresponding fluorescent image), and a second machine learning model trained to predict a residual fluorescent image from a label-free image that was provided as input to the first machine learning model and a corresponding fluorescent image obtained as the output of the first machine learning model (i.e. trained to take as inputs a label-free image and a corresponding fluorescent image output by the first machine learning model, and provide as output a residual fluorescent image). A residual fluorescent image is an image that includes fluorescent signal not captured in the output of the first machine learning model. For the purpose of training the second machine learning model, a residual image can be obtained by subtracting a fluorescent image provided as output of the first machine learning model from a corresponding ground truth fluorescent image.

The methods described herein use features derived from single cell images of macrophage cells in culture (also referred to herein as "single cell image features"). Single cell images are images that contain signal associated or assumed to be associated with a single cell. Single cell images can be obtained by cell segmentation of an original image comprising signal associated with multiple cells. Any method suitable for cell segmentation can be used to obtain single cell images according to the present methods. Suitably, cell segmentation may use one or more machine learning models, typically deep neural networks trained for instance segmentation and/or specifically for cell segmentation. These may be referred to as "cell segmentation machine learning model". Any machine learning model architecture suitable for instance segmentation may be used, such as e.g. CNNs such as e.g. ResNet models and derivatives (e.g. VoVNet2-FPN, Cascade Mask RCNN, etc. see e.g. Edlund et al. 2021), U-Net models and derivatives (see e.g. Stringer et al., 2021, Long 2020). For example, cell segmentation may be performed using a CNN such as CellPose (Stringer et al. 2021) or the models Edlund et al. (2021).

An image-derived feature is a value that is quantified for a single cell image using an image analysis algorithm. An image analysis algorithm can be a trained machine learning model and/or a computer vision algorithm. Image-derived features according to the present disclosure can be features associated with the intensity (also referred to as "intensity feature"), shape (also referred to as "shape feature" or "shape related feature") or texture (also referred to as "texture feature") of a single cell in a single cell image. An intensity feature is a feature that quantifies the intensity or distribution of intensity of a signal in a single cell image. An intensity feature can be any statistic derived from the pixel intensities in the single cell image. An intensity feature can be selected from: an image moment, a maximum intensity over the pixels corresponding to the segmented cell, a minimum intensity over the pixels corresponding to the segmented cell, a mean intensity over the pixels corresponding to the segmented cell, a median intensity over the pixels corresponding to the segmented cell, a summed intensity over the pixels corresponding to the segmented cell, and a predetermined percentile of the distribution of intensity over the pixels corresponding to the segmented cell. A shape feature can be any feature that quantifies an aspect of the shape of a segmented cell. A shape feature can be selected from: the cell eccentricity, cell extent, cell perimeter, cell solidity, cell area, and area of the cell's convex hull. A texture feature can be any feature that quantifies the perceived texture of a digital image. A texture feature can be selected from: Haar-like texture features, and gray co-occurrence statistics.

The methods described herein use machine learning models that classify cells between classes associated with different macrophage polarization states, using single cell image-derived features. The term "machine learning model" refers to a mathematical model that has been trained to predict one or more output values based on input data, where training refers to the process of learning, using training data, the parameters of the mathematical model that result in a model that can predict outputs values that satisfy an optimality criterion or criteria. In the case of supervised learning, training typically refers to the process of learning, using training data, the parameters of the mathematical model that result in a model that can predict outputs values that with minimal error compared to comparative (known) values associated with the training data (where these comparative values are commonly referred to as "labels" or "ground truth"). The term "machine learning algorithm" or "machine learning method" refers to an algorithm or method that trains and/or deploys a machine learning model.

There are two major types of supervised learning models: classification models and regression models. Classification models aim to classify observations between a plurality of categories. They are typically suitable when the output to be predicted is a categorical label in the training data (e.g. a macrophage polarization status). Regression models aim to predict the value of a continuous variable associated with observations. They are typically suitable when the output to be predicted is a continuous value in the training data. A classification model may provide as output a classification label and/or one or more probabilities of an observation belonging to respective one or more classes. A binary classification model may provide as output a single probability indicating the probability that the observation belongs to a positive class (e.g. a polarized macrophage status, rather than an unpolarised macrophage status). A predetermined threshold may be applied to the one or more probabilities to assign a class label. The threshold may be determined based on desired characteristics of the classification, such as e.g. a desired level of specificity, sensitivity or any accuracy performance that combines aspects of specificity (precision) and sensitivity (recall), such as accuracy and F1 score or balanced versions thereof that take into account the proportions of observations in the training data in each of the classes.

Embodiments of the present disclosure make use of classification models that are trained using training data comprising image derived features for single cells and associated labels identifying the cell as belonging to one of a plurality of categories associated with a macrophage polarization state. The labels used to train the classification models may be derived from the assumed polarization state of cells in a cell culture where cells have been exposed to conditions required for polarization into the assumed polarization state. The polarization state of the cells in the culture may have been verified using one or more assays such as cytokine / chemokine release assays, cell surface marker assays (e.g. flow cytometry) and/or transcriptomics assays. However, labels used to train the classification models are associated with cell culture level ground truth, not individual cells. In other words, the labels are associated with the prevalent polarization state in the cell culture to which the cell belongs, rather than being specific to every single cell in the cell culture. Thus, the labels may also be referred to as "soft" labels.

The term "machine learning algorithm" or "machine learning method" refers to an algorithm or method that trains and/or deploys a machine learning model. The machine learning models of the present disclosure are trained by supervised learning. An optimality criterion may be the minimisation of a loss function that quantifies the model prediction error based on the observed (ground truth) and predicted values of the predicted variables. Suitable loss functions for use in training machine learning models are known in the art and include the mean squared error, the mean absolute error and regularised versions thereof (particularly for regression tasks, and regression models used for classification), and the log loss (also referred to as logarithmic loss or cross entropy loss), and variants thereof such as sigmoid cross entropy loss, weighted cross entropy loss, Exponential loss, Hinge loss, etc. for classification tasks. Any of these can be used according to the present disclosure. In embodiments, a log loss is used. Regularised loss functions are functions that include a loss function as described above, and one or more terms penalizing model complexity in order to reduce the risk of overfitting. Overfitting is a phenomenon that occurs where a machine learning model is trained to very closely reproduce the features of a training data set, resulting in poorer performance on other datasets that do not have the same characteristics (i.e. poor generalizability). L1 regularisation (also known as "Lasso" in the context of regression) add a regularization term to the loss function that penalizes models based on the sum of absolute value of the coefficients of the model. L2 regularisation (also known as "Ridge" in the context of regression) add a regularization term to the loss function that penalizes models based on the sum of squared value of the coefficients of the model. L1 regularisation can be used as a feature selection method as it minimizes the coefficients associated with less informative predictive features. In embodiments, the machine learning model is a regularized model. In embodiments, the machine learning model is a regularized tree-based model. In embodiments, the machine learning model is a regularized gradient boosted decision tree model. Examples of such models are available in the XGBoost software library (xgboost.ai/). Such models may be referred to as "XGBoost" models, although any other implementation of regularized gradient boosted models may equally be used.

A machine learning model as described herein may be selected from: decision trees and variants thereof including regularised and/or gradient boosted decision trees and random forest models, regularised discriminant analysis, logistic regression models, artificial neural networks (ANNs) including multilayer perceptrons (with linear or non-linear activation functions) and deep learning models (e.g. long short-term memory networks (LSTMs), Recurrent neural networks (RNNs)), naive Bayes classifiers, and support vector machines (SVM, using linear or non-linear kernels such as radial basis function). The present inventors have found it to be particularly beneficial to use non-linear models, such as decision trees and variants thereof (including in particular random forests and gradient boosted trees), SVM with a non-linear kernel, and ANNs (e.g. multilayer perceptrons) with non-linear activation functions. Relatively simple ANNs such as MLPs are advantageous for the purpose of feature-based classification (rather than analysis of raw images) because more complex deep learning models such as LSTMs and RNNs typically have more trainable parameters.

In embodiments, a machine learning model comprises an ensemble of models whose predictions are combined. Alternatively, a machine learning model may comprise a single model. Random forest models and gradient boosted tree models (such as XGBoost) are ensemble models. Ensemble versions of any models can be constructed. Ensemble models are expected to result in better prediction performance than single models and are therefore preferred in the context of the methods described herein. For example, the machine learning model may be a random forest classifier or a gradient boosted decision tree model. A random forest classifier is a model that comprises an ensemble of decision trees and outputs a class that is the average prediction of the individual trees. Decision trees perform recursive partitioning of a feature space until each leaf (final partition sets) is associated with a single value of the target. Gradient boosting is a machine learning method that forms an ensemble of weak prediction models (e.g. decision trees) from which a combined strong prediction is obtained. The algorithm iteratively adds new weak predictors to improve the prediction obtained by combining the outputs of the weak predictors. By contrast, random forest iteratively trains a set number of trees using random subsets of the training data.

**Figure 1** is a flowchart illustrating a method for identifying the polarization state of a macrophage in live cell culture, quantifying an inflammatory metric and/or evaluating the effect of a perturbation on inflammatory processes involving macrophage polarization, according to a general embodiment of the disclosure. The method may comprise optional step 10 of providing a macrophage cell population in cell culture, and optional step 11 of acquiring images of the cell population using an optical, label-free imaging technique. Alternatively, the method may simply comprise receiving, by a computer, images of the macrophage cell population acquired using an optical, label-free imaging, and optionally one or more corresponding fluorescent images associated with respective live cell fluorescent reporters, at step 12. The method further comprises processing the images to obtain one or more image-derived features for one or more cells, at step 14. This may comprise any of the optional step 14A of using a machine learning model to obtain an *in silico* stained image corresponding to an optical label free image, optional step 14B or segmenting one or more single cells in the label-free image and obtaining corresponding segmented single cells in any corresponding stained image, and optional step 14C of using one or more computer vision algorithms to quantify one or more image-derived features for one or more of the segmented cells. At step 16, the image features obtained at step 14 are used to classify one or more cells between a plurality of classes associated with different macrophage polarization states. At optional step 18, the value of one or more inflammatory metrics are computed based on the results of step 16. At step 20, the results of any of steps 14, 16 and/or 18 may be provided to a user.

**Figure 2** is a flowchart illustrating a method for providing a tool for identifying the polarization state of a macrophage in live cell culture, quantifying an inflammatory metric and/or evaluating the effect of a perturbation on inflammatory processes involving macrophage polarization, according to a general embodiment of the disclosure. The method may comprise optional step 20 of providing a plurality of cell populations in cell culture, and optional steps 21 to 23 of acquiring training data from the plurality of cell populations. Alternatively, the training data may have been previously acquired and may simply be received by a computer. The optional steps of acquiring training data may comprise step 21 of acquiring images of the cell populations using an optical label-free imaging technique, and corresponding fluorescent images comprising a signal indicative of the presence of a marker or reporter. Optional step 22 comprises verifying the polarization state of the cell populations from which the images were acquired, for example using one or more of: cytokine/chemokine release assays, cell surface marker assays (e.g. flow cytometry) and transcriptomics assays. Alternatively, the polarization state of the cell populations may be assumed to correspond to the polarization state expected as a result of the culture conditions in which the cell population was cultured. Importantly, the polarization state of all cells in a cell culture, and as such all cells in an image of a cell culture, may be assumed to be the same. At optional step 23, the images acquired at step 23 may be used to train one or more machine learning models to predict labelled images from corresponding label-free images. This may comprise a first step of training a first machine learning model to take as input an optical label-free image of a cell or cell population in a live cell culture, and produce as output a corresponding labelled image, wherein the training uses training data comprising pairs each comprising an optical label-free image of a cell or cell population in a live cell culture, and a corresponding labelled image acquired using fluorescence microscopy. Step 23 may comprise a second step of training a second machine learning model to take as input an optical label-free image of a cell or cell population in a live cell culture and a corresponding output of the first machine learning model, and produce as output a corresponding residual labelled image. The training of the second machine learning model uses training data comprising triplets each comprising an optical label-free image of a cell or cell population in a live cell culture, a corresponding labelled image obtained as output of the first machine learning model, and a corresponding residual labelled images obtained by subtracting the labelled image obtained as output of the first machine learning model from the corresponding labelled image acquired using fluorescence microscopy. Instead or in addition to training a model, step 23 may comprise obtaining a previously trained virtual staining model. The previously trained virtual staining model may have been trained to predict a labelled image of a cell or cell population using as input a label-free optical image of the cell or cell population. The previously trained virtual staining model may have been trained using live cell image data or fixed cell image data. The previously trained virtual staining model may be used to obtain virtual staining images, or may be used as a starting point to further train (also referred to as "fine-tune") the model as described above. In other words, the process of training a virtual staining machine learning model as described above may start from a machine learning model with randomly initialised weights, or from a machine learning model with weights that have been previously determined for a virtual staining task.

At step 24, a plurality of image derived features are obtained from the images obtained at step 21 or a combination of images obtained at step 21 (e.g. label-free images) and corresponding labelled images obtained using a trained model obtained at step 23. This may comprise substantially the same steps as described above in relation to step 14. However, in the context of training a model, the features that are quantified include all of the features that are quantified at step 14 and may further include additional features that are not used in the final trained classification model. In other words, training of the classification model may include a feature selection process. Alternatively, the training or the classification model may not include an explicit feature selection process, but may use a regularised loss function as described above.

At step 26, a classification model (machine learning classifier) is trained using the values from step 24 and the cell class labels associated with those values and optionally verified at step 22 (at the cell culture level, not at the level of individual cells). At optional step 28, the model obtained at step 26 and optionally the model(s) obtained at step 23 are provided to a user.

**Figure 3** illustrates schematically an exemplary system according to the disclosure. The system comprises a computing device 1, which comprises a processor 101 and computer readable memory 102. In the embodiment shown, the computing device 1 also comprises a user interface 103, which is illustrated as a screen but may include any other means of conveying information to a user such as e.g. through audible or visual signals. In the illustrated embodiment, the computing device 1 is operably connected, such as e.g. through a network 6, to a cell culture system comprising a cell culture housing 2 and one or more sensors 3. The cell culture housing may be an incubator or any other kind of housing suitable for live cell culture in a culture dish or vessel. The cell culture system may be an integrated system comprising a cell culture housing and at least one sensor, such as e.g. an Incucyte^{®} live-cell analysis system. The computing device may be a smartphone, tablet, personal computer or other computing device. The computing device is configured to implement a method as described herein. In alternative embodiments, the computing device 1 is configured to communicate with a remote computing device (not shown), which is itself configured to implement a method as described herein. In such cases, the remote computing device may also be configured to send the result of the methods to the computing device 1. Communication between the computing device 1 and the remote computing device may be through a wired or wireless connection, and may occur over a local or public network such as e.g. over the public internet. Each of the sensor(s) 3 may be in wired connection with the computing device 1, or may be able to communicate through a wireless connection, such as e.g. through WiFi, as illustrated. The connection between the computing device 1 and the sensor(s) 3 may be direct or indirect (such as e.g. through a remote computer). In alternative embodiments, the computing device 1 is configured to implement a method as described herein, using images received from a data store or remote computing device (such as e.g. a computing device associated with the cell culture system). Thus, the computing device 1 may not be directly connected to the cell culture system. In such embodiments, the computing device 1 may provide results of the methods as described herein to a remote computing device or data store. The one or more sensors 3 comprise at least one sensor configured to acquire label-free images of one or more cell population(s) in the cell culture housing (e.g. a phase contrast microscope or bright-field microscope). The sensors 3 may further comprise at least one sensor configured to acquire labelled images of the one or more cell population(s) in the cell culture housing (such as e.g. a fluorescence microscope). The sensors 3 may further comprise at least one sensor configured to verify a polarization state, such as e.g. a sensor configured to measure the proportion of cells with a particular characteristic in the cell population (e.g. a FACS machine). The measurements from the sensors 3 are communicated to the computing device 1 or a data store, which may store the data permanently or temporarily in memory 102. The computing device memory 102 may store a trained machine learning classification model and optionally one or more trained virtual staining machine learning models as described herein. The processor 101 may execute instructions to compute one or more label-free image derived features and/or one or more labelled image derived features using one or more computer vision algorithms and optionally the trained virtual staining machine learning model(s), and to predict a polarization state for one or more cells in the cell culture, This may be performed in real time, i.e. as the cell culture is underway. This may be performed at regular intervals throughout a cell culture, such as e.g. every 4 hours. The processor 101 may execute instructions to provide a tool for identifying macrophage polarization states as described herein (such as e.g. by training a machine learning classification model and optionally a virtual staining model), using the data from the one or more sensors 3, as described herein (such as e.g. by reference to Figure 1 or Figure 2).

The methods described herein find application in a variety of contexts. For example, the methods described herein can be particularly useful in the context of drug screening. An example of such a workflow is shown on **Figure 5****.** As illustrated on Figure 5, the methods described herein enable live classification of the type of macrophages present in the cell culture as it is being exposed to a perturbation to be assessed (e.g. a drug, whether small or large molecule, a vaccine, a xenobiotic, or any other agent, compound or composition to be screened). Because the methods enable live classification, the results of the classification can be used to quantify inflammatory metrics associated with dynamics of the polarization or repolarization process. This can be particularly useful in the context of high-throughput drug safety evaluation, enabling the study of how drugs and compounds modulate the immune system and immune responses. Evaluating the effects of drugs on macrophage polarization using *in silico* image processing can provide valuable insights into their immunomodulatory properties and potential therapeutic applications. The methods of the present disclosure also find use in the context of evaluating monocyte/macrophage dysfunction, which underlies a number of inherited or acquired disorders (for example Gauger disease, inflammatory bowel disease, chronic granulomatous disease), and how therapeutic compounds can restore macrophage activity.

Currently, the inflammatory effect of a drug can be evaluated in macrophages by assessing their response to the drug in terms of cytokine production, cell surface marker expression, and functional assays. All of these involve the use of extensive experimentation using immunoassays (sandwich or bead-based), transcriptome analysis, flow cytometry or immunofluorescence staining at different timepoints. With certain embodiments of the present invention, the need for expensive and time-consuming experimentation using ELISA, PCR, flow cytometry (including FACS), or immunofluorescence staining is eliminated.

Methods for identifying some macrophages polarization states using image data have been proposed. However, prior to the present disclosure, classification of multiple macrophages polarization states using optical label free images of cells while in cell culture (i.e. undisrupted) had never been performed. As explained above, the use of images of live cells in cell culture means that polarization can be studied in a dynamic manner throughout cell culture, enabling the study of dynamic phenomena such as speed of polarization and repolarization, which was not previously possible. For example, Rostam et al., 2017 used peripheral blood mononuclear cells (PMBCs) to derive M1, and M2 macrophages, then developed a supervised classifier to distinguish between M1 and M2 macrophages using morphological descriptors obtained from composite images of f-actin and DAPI stained fixed cells obtained using confocal microscopy. A plurality of binary classifiers were obtained, one for each of 5 cell types: M1, M2, naïve macrophage, monocytes day 0, monocytes day 6. The work uses exclusively fixed cells and fluorescence data. As explained below, fluorescence images on fixed cells provides completely different information from optical label free images on live cells or even fluorescence images on live cells. Indeed, even fluorescence images for live cells is a much less predictable readout than fixed cell fluorescence images. Similarly, Bertani et al., 2017 obtained M1 and M2 macrophages from human PBMCs, which were then fixed and analysed using fluorescent imaging, flow cytometry, and RT-qPCR. Fluorescent imaging used a hyperspectral microscope and focused on the F-actin content and nuclei of the macrophages. The hyperspectral datasets were then analysed in terms of M1 vs. M2 polarization by Principal Components Analysis (PCA). Following PCA, Linear Discriminant Analysis was implemented for semi-automatic classification of macrophagic polarization (M1 vs M2) from HSI data. This again uses fixed cell data and specialised microscopy equipment, and is limited to M1/M2 states. As another example, Dannhauser et al., 2022 differentiated human PBMCs into M0, M1, and M2 macrophages. Using a microfluidic device that allows for precise in-flow optical readout of single live cells by light scattering in suspension to assess dimension, nuclear/cytoplasm diameter, and nuclear and cytoplasm refractive index, they were able to classify M1 vs M2 macrophages. However, this does not use images of cells in culture, instead requiring that the culture is interrupted for single cell processing. In Alfonso-Garcia et al. 2016, live mouse bone marrow-derived macrophages (BMDM) of the M0, M1, and M2 subtypes were investigated with FLIM (fluorescence lifetime imaging microscopy, to obtain measurements indicative of the NADH ratio) and immunofluorescence (for Arg-1 and iNOS levels). The authors showed that different macrophage subtypes are associated with different lifetime distributions as assessed using NADH-FLIM. However, the authors did not provide a classification method, instead simply showing that the IL-4/IL-13 polarized macrophages have higher contributions of protein-bound NADH whereas IFN-γ/LPS-polarized macrophages have lower lifetimes, assigned to higher contributions of free NADH. It is therefore unclear whether these differences would be usable as part of a classifier with usable classification accuracies, or whether any macrophage subtypes beyond these could be identified, Additionally, NADH-FLIM requires specialised equipment that is far less widely available than e.g. phase contrast or brightfield microscopes. Finally, the Livecyte^{®} instrument from Phasefocus, which uses ptychographic quantitative phase imaging (QPI), was shown to be usable to produce time lapse images of macrophages exposed to LPS and IFNγ for M1 polarization, from which cell morphological parameters median cell area, median cell perimeter and median cell sphericity were measured over the course of the culture. However, this was not shown to enable any type of classification, let alone classification between multiple polarised subtypes, and used specialised equipment. The presence of temporal changes of morphological parameters at the population level does not necessarily mean that the change would be significant and reliable enough at the single cell level to enable any classification.

The present inventors identified a need for methods that can perform macrophage polarization identification in a more flexible manner (e.g. for more polarization subtypes), using readily available optical microscopy data, and crucially performed on (undisrupted) live cell cultures.

The following is presented by way of example and is not to be construed as a limitation to the scope of the claims.

### Examples

Exemplary methods of obtaining and using tools for macrophage subtype classification will now be described.

### Introduction

Macrophages play a crucial role in the inflammatory response and can be activated or modulated by various stimuli, including drugs. The major polarization states of macrophages are the classically activated (M1) phenotype, associated with pro-inflammatory responses, and the alternatively activated (M2) phenotype, associated with anti-inflammatory and tissue repair functions. M2 macrophages are categorised into different subtypes based on their activation stimuli and resultant functions, and include M2a, M2b, M2c, and M2d subcategories. These macrophages differ in their cell surface markers, secreted cytokines, and biological functions. The activation process and general role for each M2 macrophage subtype can be seen in **Table 1.** M0 macrophages, also known as unpolarised or resting macrophages, represent a phenotype that exists before macrophages are exposed to specific stimuli that can polarise these to M1 or various M2 subsets. The naive M0 macrophages are obtained by the differentiation of monocytes and serve as the baseline state of macrophages.

The present examples focus in particular on polarization classes M0, M1, M2a, and M2c. The stimuli, cell surface markers, and roles for each of the considered subtypes are shown in **Figure 4****.** As illustrated on Figure 4, the four different subtypes are challenged using various cytokines, bacterial peptides and growth factors to enable proper polarization. Upon polarization they exhibit different functions. M1 macrophages are responsible for classical pathogen killing via Th1 responses. The M2a subtype is known to be involved in parasite killing via Th2 responses, and contributes to allergic reactions. Matrix deposition, immunoregulation and tissue remodeling are classical features for M2c macrophages. Upon polarization, each of these subtypes express a variety of membrane markers, but despite their different functionality, their marker expression is overlapping extensively. However, the different subtypes typically secrete characteristic sets of cytokines and chemokines. M1 macrophages mainly secrete pro-inflammatory factors, e.g. TNF-α and IL-6, while M2a macrophages predominantly secrete for instance IL-4 and CCL17 (TARC). M2c macrophages are characterized by the secretion of IL-10.

**Table 1 - characteristic activation process and role for each of the M2 subtypes: M2a, M2b, M2c, M2d**

| **M2 Macrophage Subtype** | **Activation process** | **Role** |
|---|---|---|
| M2a | Activated by IL-4 or IL-13 | Lead to the increased expression of IL-10, TGF-β, CCL17, CCL18, and CCL22. |
| | | Enhance endocytic activity, promote cell growth and tissue repair. |
| M2b | Activated by immune complex, Toll-like receptor (TLR) ligands and IL-1β | Release both pro- and anti-inflammatory cytokines, such as TNF-α, IL-1β, IL-6, and IL-10. Involved in immunoregulation. |
| M2c | Induced by glucocorticoids, IL-10 and TGF-β | Also known as inactivated macrophages but secrete IL-10, TGF-β, CCL16, and CCL18 and play crucial roles in the phagocytosis of apoptotic cells process. |
| | | Contribute to tissue remodelling and resolution of inflammation |
| M2d | Induced by TLR antagonists | Lead to the release of IL-10 and vascular endothelial growth factors (VEGF) |
| | | Promote angiogenesis and tumour progression |

The inventors have developed a classification model based on images of macrophages acquired on the Incucyte^{®} Live-Cell Analysis System (Sartorius). The classification model automatically assigns a label to all cells in the image, with the label corresponding to the cell's polarization, specifically classifying macrophages as M0, M1, M2a or M2c subtype.

### Materials and Methods

*hiPSC-monocyte differentiation.* The hiPSC line LUMCi0004-A was maintained in Essential 8 Medium (E8; Thermo Fisher Scientific) on vitronectin (Thermo Fisher Scientific)-coated plates. Cells were harvested twice weekly using Gentle Cell Dissociation Reagent (Stem Cell Technologies) for 5 minutes at room temperature. Aggregates were counted manually and plated at a concentration of ~60 aggregates/6well plate in E8 on Matrigel-coated wells (Corning). 24 hours post seeding, differentiation was started. Mesoderm was induced in IF9S medium (Cao et al. 2020) supplemented with 50 ng/mL BMP4 (R&D systems), 5 ng/mL Activin A (Miltenyi Biotec) and 1.5 µM CHIR99021 (Axon Medchem) for 2 days. On day 2, cells were refreshed with IF9S supplemented with 50 ng/mL VEGF (Miltenyi Biotec), 50 ng/mL SCF (Miltenyi Biotec), 10 µM SB431542 (Tocris Bioscience) and 50 ng/mL FGF2 (Miltenyi Biotec). On day 5 and 7, cells were refreshed with IF9S supplemented with 50 ng/mL VEGF, 50 ng/mL SCF, 50 ng/mL TPO (Miltenyi Biotec), 50 ng/mL FGF2, 50 ng/mL IL-6 (Miltenyi Biotec) and 10 ng/mL IL-3 (Miltenyi Biotec). On day 9, non-adherent hematopoietic progenitor cells (HPCs) were collected, and adherent cells were dissociated using 1x TrypLE for 5 minutes and subsequently Accutase (PromoCell) for 5 minutes at 37°C. Thereafter, cells were replated in ultra-low attachment plates in IF9S supplemented with 80 ng/mL M-CSF (Miltenyi Biotec), 50 ng/mL IL-6 and 10 ng/mL IL-3-and refreshed again with the same cocktail on day 12. On day 15, all floating cells were collected and CD14+ monocytes were isolated using CD14 microbeads (Miltenyi Biotec) according to the manufacturer's instructions. Upon isolation, 1.5×10^6 CD14+ monocytes were cryopreserved per vial in CryoStor CS10 (Stem Cell Technologies) using a Mr. Frosty freezing container at -80°C and were transferred to liquid nitrogen after 24 hours.

*Macrophage polarization.* In order to produce populations of polarised macrophages, the inventors thawed the cryopreserved monocytes and resuspended them in IF9S supplemented with 80 ng/mL M-CSF and 1:200 RevitaCell Supplement (Thermo Fisher Scientific) before plating them on plates coated overnight with fetal bovine serum (FBS). Medium was changed every 2-3 days until the cells were confluent. The cells were then replated at a density of 78.000 cells/cm² in IF9S supplemented with 80 ng/mL. 24 hours post replating, macrophage polarization was started. M1 macrophages were polarised using 20 ng/mL IFN-γ (Peprotech) and 10 ng/mL LPS Escherichia coli O55:B5 (Sigma). IF9S medium was supplemented with 20 ng/mL IL-4 (Miltenyi Biotec) to induce M2a polarization. 80 ng/mL M-CSF and 10 ng/mL IL-10 (Miltenyi Biotec) was used to polarise to M2c macrophages.

*F-actin staining.* CellMask Green Actin Tracking Stain (Thermo Fisher Scientific) was used to visualize F-actin distribution in replated M0 macrophages. Cells were incubated with 1X green F-actin dye for 30 minutes at 37°C. Subsequently, cells were washed 3 times with IF9S and polarization was induced as described previously. Cell morphology and F-actin distribution was imaged using the phase and green imaging channels for 48 hours in the Incucyte (Sartorius) with an interval of 4 hours. M0 macrophages were stained to enable visualisation of the F-actin distribution over time during polarization. However, experiments were also performed with staining of the polarised subtypes, which showed that cells stained prior to or after polarization have a similar morphology (i.e. the staining prior to polarization did not interfere with polarization and the staining of cells prior to polarization produced a staining after polarization that was similar to that obtained by staining the polarized cells).

*Flow cytometry analysis.* Cells were dissociated with Accutase for 10 minutes at 37°C and collected in FACS wash buffer (1x PBS supplemented with 2% FBS and 2mM EDTA). Antibodies (all Miltenyi Biotec) were diluted 1:50 and incubated for 20 minutes at 4°C. Subsequently, cells were washed twice and analyzed using the MACSQuant VYB (Miltenyi Biotec). Antibodies used were against CD80, CD163 and CD206.

*Multiplex cytokine and chemokine secretion assay.* 48 hours after the start of polarization, supernatant was collected and spun down at 1000 RCF for 7 minutes. Chemokine and cytokine secretion 48 hours post polarization was measured using the LEGENDplex human macrophage and microglia panel kit (Biolegend) according to manufacturer's instructions. In short, samples were diluted 6 times and incubated with beads against IL-12p70, TNF-α, IL-6, IL-4, IL-10, IL-1β, Arginase, TARC, IL-1RA, IL-12p40, IL-23, IFN-γ, and IP-10. Subsequently, samples were incubated with biotinylated detection antibodies and streptavidin PE and data was collected using the Aurora 3 laser spectral flow cytometer equipped with a plate loader (Cytek).

*Phagocytosis assay.* Polarised macrophages were treated with various concentrations of pHrodo^{®} red S. aureus Bioparticles for Incucyte^{®} (Sartorius) and imaged with a 15-minute time interval using the phase and red imaging channel using the Incucyte for 48 hours. Plots representative of the phagocytic activity of the four macrophage subtypes can be seen in **Figure 6****.** The plots show that red fluorescent signal (associated with S. aureus particles phagocytosis) increases in a time- and dose-dependent manner for all four subtypes meaning they are functional macrophages.

*Data batches.* 3 batches of viable cells were used (labelled with the identifiers LB2315, LB2319 and LB2342). The three viable batches had differing number of wells and staining conditions.
1. LB2315: 24 wells, 6 wells per polarization (2 unstained control wells and 4 stained wells per polarization). Of the stained wells, for each polarization 2 wells were stained with standardized 1.0 F-actin concentration units and 2 well were stained with 0.75 standardized concentration units to test whether lower concentrations would be sufficient to visualise the F-actin filaments. The data showed that the lower concentration would be sufficient to visualised the filaments, and that the morphology of the cells was the same in both conditions. The signal was stronger when using the 1x concentration (as per the manufacturer's recommendations) so this was used for all subsequent experiments.
2. LB2319: 80 wells were fully stained with F-actin (standardized 1.0 F-actin concentration units), with 20 wells per polarization and 4 wells per seeding value per polarization (seeding values were 6,250,000/well, 3,125,000/well, 50,000/well, 25,000/well, and 12,500/well)
3. LB2342: 24 wells, 6 wells per polarization with 1 non-F-actin stained well and 5 stained wells per polarization.

*Imaging.* All wells were imaged using the Incucyte's built-in widefield microscope with automatic adjustment of the z-axis position, used to compute phase-contrast images of samples. All wells were also imaged using the Incucyte's built-in 2-channel fluorescence imaging capability (although a single channel corresponding to the F-actin dye was used in the present experiments). The cells were imaged from the time of introduction of the differentiation factors and every 4 hours thereafter. The classifier was trained on phase-contrast and fluorescence image data generated with an Incucyte^{®} S3 and SX5 Live-Cell Analysis System (. (Sartorius).

*Cell segmentation.* Automated cell segmentation was performed using existing cell segmentation machine learning algorithms. The inventors trialled both CellPose (Stringer et al. 2021) and the models Edlund et al. (2021). All results showed here use the CellPose deep neural network to segment and count the number of cells in each well.

*Feature extraction.* In order to capture existing differences between polarizations, a set of image features were extracted from each segmented cell in each image. The selected features were based on previous experience and the knowledge that the inclusion of every relevant feature would increase the risk of overfitting. Feature extraction was performed with the python libraries scikit-image (Van derWalt et al. 2014) and mahotas (Coelho, 2013). For each phase contrast image and corresponding fluorescence (F-actin) image of each cell, a range of feature sets were measured and concatenated into one vector to represent the morphology and internal structure of each cell. These included:
- intensity features - including Hu image moments (Hu et al. 1962) [and their intensity weighted version, maximum intensity over cell, minimum intensity over cell, and mean intensity over cell.
- shape-related features: cell eccentricity, cell extent, cell area, area of the cell's convex hull, cell perimeter, solidity.
- texture features: these were computed as Haralick texture features (Haralick et al. 1973) for each cell, and the gray co-occurrence statistics (gray co-properties) along angles, as updated and implemented in scikit-image (Hall-Beyer, 2000).

Haralick texture features were used in order to capture the internal structure of the cell. This was done to capture the variation in features such as the visibility of circular organelles and cell membrane that exists been macrophage subtypes. The above plurality of categories of features were used because variation exists in cell size and shape within macrophage subtypes (e.g. if a M0 macrophage is dividing, it will crawl up/get a round morphology and after division it will get its elongated morphology back), such that it is beneficial for at least some of the features used to be invariant to this, although using features that captured size differences was also believed to be important as cell elongation is a key difference between polarization states. Shape related features were calculated for each cell using the segmented shape of the cell. Intensity features were calculated for each cell using the pixels in the segmented area of the cell. Texture features were calculated on a masked image: an image was obtained using a bounding box centred on the cell, the region of the image that does not contain the cell was set to 0, and the texture features were then computed. Hu image moments were computed as implemented in scikit-learn. The unweighted moments are obtained by summing over all pixels that are in the segmented cell (excluding pixels that are outside of the cell). The weighted moments are obtained by summing over all pixels that are in the segmented cell, weighted by their intensity. The cell extent was calculated for each segmented cell in a fixed size bounding box centred around the cell as the ratio of pixels in the (cell) region to pixels in the total bounding box. This was computed as (cell area / (rows * cols)), using scikit-image's scimage.measure extent feature (see https://scikit-image.org/docs/stable/api/skimage.measure.html). The gray coproperties were computed as implemented in scikit-image's scimage.feature.graycoprops function (see https://scikit-image.org/docs/stable/api/skimage.feature.html#skimage.feature.graycoprops). The Haralick texture features were computed as implemented in the Mahotas package (Coelho, LP (2013)), see https://mahotas.readthedocs.io/en/latest/mahotas-features.html. The solidity is the ratio of the pixels in the segmented cell to the pixels of the convex hull image for the segmented cell (the smallest convex polygon that encloses the segmented cell). It was calculated using skimage.measure.regionprops(). The cell eccentricity is the eccentricity of the ellipse that has the same second-moments as the segmented cell. The eccentricity is the ratio of the focal distance (distance between focal points) over the major axis length. The value is in the interval [0, 1), with 0 meaning that the ellipse is a circle. Cell eccentricity was calculated using skimage. measure. regionprops().

A total of 100 features were obtained for each of the phase contrast images and each of the fluorescence images, i.e. 200 features per segmented cell image. The features were scaled to zero-mean and unit standard deviation before classification (separately for each feature using sklearn.preprocessing.StandardScaler). The 200 features are listed below: (1) phase contrast image features (labelled with "_ph"):
(a) from library function skimage.measure.moments_hu(nu): hu_moment0_ph, hu_moment1_ph, hu_moment2_ph, hu_moment3_ph, hu_moment4_ph, hu_moment5_ph, hu_moment6_ph;
(b) from library function skimage.measure.regionprops(): weighted_hu_moment0_ph, weighted_hu_moment1_ph, weighted_hu_moment2_ph, weighted_hu_moment3_ph, weighted_hu_moment4_ph, weighted_hu_moment5_ph, weighted_hu_moment6_ph, area_ph, area_convex_ph, eccentricity_ph, extent_ph, intensity_max_ph, intensity_mean_ph, intensity_min_ph, perimeter_ph, solidity_ph,
(c) from library function mahotas.features.haralick: haralick vert0_ph, haralick_vert1_ph, haralick_vert2_ph, haralick_vert3_ph, haralick_vert4_ph, haralick_vert5_ph, haralick_vert6_ph, haralick vert7_ph, haralick_vert8_ph, haralick_vert9_ph, haralick_vert10_ph, haralick_vert11_ph, haralick_vert12_ph, haralick_horz0_ph, haralick_horz1_ph, haralick_horz2_ph, haralick_horz3_ph, haralick_horz4_ph, haralick_horz5_ph, haralick_horz6_ph, haralick_horz7_ph, haralick_horz8_ph, haralick_horz9_ph, haralick horz10_ph, haralick_horz11_ph, haralick_horz12_ph, haralick maj diag0_ph, haralick maj diag1_ph, haralick maj diag2_ph, haralick maj diag3_ph, haralick maj diag4_ph, haralick maj diag5_ph, haralick_maj_diag6_ph, haralick_maj_diag7_ph, haralick maj diag8_ph, haralick maj diag9_ph, haralick maj diag10_ph, haralick maj diag11_ph, haralick maj diag12_ph, haralick_min_diag0_ph, haralick_min_diag1_ph, haralick_min_diag2_ph, haralick_min_diag3_ph, haralick_min_diag4_ph, haralick_min_diag5_ph, haralick_min_diag6_ph, haralick min diag7_ph, haralick_min_diag8_ph, haralick_min_diag9_ph, haralick_min_diag10_ph, haralick_min_diag11_ph, haralick min diag12_ph, gray_contrast_d5_a0_ph,
(d) from library function skimage.feature.graycomatrix, grayprops: gray_contrast_d5_a0.78_ph, gray_contrast_d5_a1.57_ph, gray_contrast d5 a2.36_ph, gray_contrast_d20_a0_ph, gray_contrast_d20_a0.79_ph, gray_contrast_d20_a1.57_ph, gray_contrast_d20_a2.36_ph, gray_contrast_d100_a0_ph, gray_contrast_d100_a0.79_ph, gray_contrast_d100_a1.57_ph, gray_contrast_d100_a2.36_ph, gray_correlation d5 a0_ph, gray_correlation d5 a0.79_ph, gray_correlation_d5_a1.57_ph, gray_correlation d5 a2.36_ph, gray_correlation d20 a0_ph, gray_correlation d20 a0.79_ph, gray_correlation_d20_a1.57_ph, gray_correlation d20 a2.36_ph, gray_correlation_d100_a0_ph, gray_correlation_d100_a0.79_ph, gray_correlation d100 a1.57_ph, gray_correlation_d100_a2.36_ph. (2) f1 actin fluorescence image features (labelled with "_c1_cal"):
(e) from library function skimage.measure.moments_hu(nu): hu_moment0_c1_cal, hu_moment1_c1_cal, hu_moment2_c1_cal, hu_moment3_c1_cal, hu_moment4_c1_cal, hu_moment5_c1_cal, hu_moment6_c1_cal, weighted_hu moment0 c1 cal,
(f) from library function skimage.measure.regionprops(): weighted_hu_moment1_c1_cal, weighted_hu moment2 c1 cal, weighted_hu_moment3_c1_cal, weighted_hu_moment4_c1_cal, weighted_hu moment5 c1 cal, weighted_hu_moment6_c1_cal, area_c1_cal, area_convex_c1_cal, eccentricity_c1_cal, extent_c1_cal, intensity_max_c1_cal, intensity_mean_c1_cal, intensity_min_c1_cal, perimeter_c1_cal, solidity_c1_cal,
(g) from library function mahotas.features.haralick: haralick_vert0_c1_cal, haralick_vert1_c1_cal, haralick_vert2_c1_cal, haralick_vert3_c1_cal, haralick_vert4_c1_cal, haralick_vert5_c1_cal, haralick_vert6_c1_cal, haralick_vert7_c1_cal, haralick_vert8_c1_cal, haralick_vert9_c1_cal, haralick_vert10_c1_cal, haralick_vert11_c1_cal, haralick_vert12_c1_cal, haralick_horz0_c1_cal, haralick_horz1_c1_cal, haralick_horz2_c1_cal, haralick_horz3_c1_cal, haralick_horz4_c1_cal, haralick_horz5_c1_cal, haralick_horz6_c1_cal, haralick_horz7_c1_cal, haralick_horz8_c1_cal, haralick_horz9_c1_cal, haralick_horz10_c1_cal, haralick_horz11_c1_cal, haralick_horz12_c1_cal, haralick_maj_diag0_c1_cal, haralick_maj_diag1_c1_cal, haralick_maj_diag2_c1_cal, haralick_maj_diag3_c1_cal, haralick_maj_diag4_c1_cal, haralick_maj_diag5_c1_cal, haralick_maj_diag6_c1_cal, haralick_maj_diag7_c1_cal, haralick_maj_diag8_c1_cal, haralick_maj_diag9_c1_cal, haralick_maj_diag10_c1_cal, haralick_maj_diag11_c1_cal, haralick_maj_diag12_c1_cal, haralick_min_diag0_c1_cal, haralick_min_diag1_c1_cal, haralick_min_diag2_c1_cal, haralick_min_diag3_c1_cal, haralick_min_diag4_c1_cal, haralick_min_diag5_c1_cal, haralick_min_diag6_c1_cal, haralick_min_diag7_c1_cal, haralick_min_diag8_c1_cal, haralick_min_diag9_c1_cal, haralick_min_diag10_c1_cal, haralick_min_diag11_c1_cal, haralick_min_diag12_c1_cal, gray_contrast_d5_a0_c1_cal,
(h) from library function skimage.feature.graycomatrix, grayprops: gray_contrast_d5_a0.78_c1_cal, gray_contrast d5 a1.57 c1 cal, gray_contrast_d5_a2.35_c1_cal, gray_contrast d20 a0 c1 cal, gray_contrast d20 a0.78 c1 cal, gray_contrast d20 a1.57 c1 cal, gray_contrast d20 a2.36 c1 cal, gray_contrast_d100_a0_c1_cal, gray_contrast_d100_a0.79_c1_cal, gray_contrast_d100_a1.57_c1_cal, gray_contrast d100 a2.36 c1 cal, gray_correlation d5 a0 c1 cal, gray_correlation_d5_a0.79_c1_cal, gray_correlation d5 a1.57 c1 cal, gray_correlation d5 a2.36 c1 cal, gray_correlation d20 a0 c1 cal, gray_correlation_d20_a0.79_c1_cal, gray_correlation d20 a1.57 c1 cal, gray_correlation d20 a2.36 c1 cal, gray_correlation d100 a0 c1 cal, gray_correlation d100 a0.79 c1 cal, gray_correlation_d100_a1.57_c1_cal, gray_correlation d 100 a2.36 c1 cal.

The numbers in the gray correlation and gray contrast features are the angles at which the correlation is computed, with the letter "a" indicating the angle, and the number following providing an angle in radians. Other values are possible.

*Macrophage polarization classification, evaluation, and validation.* A gradient-boosted trees classifier was trained using the XGBoost algorithm and python library (Chen & Guestrin 2016; xgboost.readthedocs.io/en/stable/python/index.html) to predict the polarization of macrophages based on the aggregated morphological features derived from images of segmented, polarised macrophages. Cells were labelled with the overall well label, under the assumption that all cells had been polarised correctly to the intended subtype. A grid search on the tree's ensemble parameters was performed to maximize for overall classification accuracy, as well as ensuring that the model performance was not too dependent on any combinations of parameters. The parameters over which the search was conducted are the number of trees (search over 3 values), the maximum tree depth (4 values), the maximum number of tree leaves (4 values) and the tree growth policy (2 values), for a total of 96 parameter combinations. Two thirds of the dataset was randomly selected for training and one third for testing. This process was repeated 5 times to obtain scores across different splits of the dataset. The accuracy and generalization capability of the model was assessed using macrophage-specific evaluation metrics and rigorous validation techniques. The evaluation was measured using precision, recall, f1-score, and classification accuracy. Two different evaluations were carried out: the classifier was trained and evaluated on individual samples in the first evaluation. In the second evaluation the classifier was trained and evaluated on the three combined batches. The label for the samples used to train and evaluate the model was validated through FACS flow cytometry and cytokine screening.

*Virtual F-actin staining.* A U-Net deep neural network (Ronneberger et al. 2015) was trained to translate phase contrast images into F-actin labelled images following the concept of *in-silico* labelling (Christiansen et al. 2018). The architecture that was used for labelling is a modified UNet with 6 layers of depth, that is 6 encoder blocks, one centre block, and 6 decoder blocks. The convolutional blocks start from 16 filters at the input and output layers and go to a maximum of 64 filters at the central layers. Instance norm and leakyReLU are used in every encoder / decoder block. The full architecture of each block is shown below (semicolumns are used instead of carriage returns):
(input_block): Sequential( (0): Conv2d(1, 16, kernel_size=(3, 3), stride=(1, 1), padding=(1, 1)); (1): InstanceNorm2d(16, eps=1e-05, momentum=0.1, affine=False, track_running_stats=False); (2): LeakyReLU(negative_slope=0.01, inplace=True); (3): Conv2d(16, 16, kernel_size=(3, 3), stride=(1, 1), padding=(1, 1)); (4): InstanceNorm2d(16, eps=1e-05, momentum=0.1, affine=False, track_running_stats=False); (5): LeakyReLU(negative_slope=0.01, inplace=True)) (dec1): _DecoderBlock((decode): Sequential( (0): Conv2d(128, 128, kernel_size=(3, 3), stride=(1, 1), padding=(1, 1));(1): InstanceNorm2d(128, eps=1e-05, momentum=0.1, affine=False, track_running_stats=False);(2): Dropout(p=0.3, inplace=False); (3): LeakyReLU(negative_slope=0.01, inplace=True);(4): Conv2d(128, 32, kernel_size=(3, 3), stride=(1, 1), padding=(1, 1));(5): InstanceNorm2d(32, eps=1e-05, momentum=0.1, affine=False, track_running_stats=False); (6): LeakyReLU(negative_slope=0.01, inplace=True); (7): Dropout(p=0.3, inplace=False)))
(enc0): _EncoderBlock((encode): Sequential((0): Conv2d(16, 32, kernel_size=(3, 3), stride=(1, 1), padding=(1, 1)); (1): InstanceNorm2d(32, eps=1e-05, momentum=0.1, affine=False, track_running_stats=False); (2): LeakyReLU(negative_slope=0.01, inplace=True); (3): Dropout(p=0.3, inplace=False); (4): Conv2d(32, 32, kernel_size=(3, 3), stride=(1, 1), padding=(1, 1)); (5): InstanceNorm2d(32, eps=1e-05, momentum=0.1, affine=False, track_running_stats=False); (6): LeakyReLU(negative_slope=0.01, inplace=True); (7): Dropout(p=0.3, inplace=False); (8): MaxPool2d(kernel_size=2, stride=2, padding=0, dilation=1, ceil_mode=False)))
(dec0): _DecoderBlock((decode): Sequential((0): Conv2d(64, 64, kernel_size=(3, 3), stride=(1, 1), padding=(1, 1)); (1): InstanceNorm2d(64, eps=1e-05, momentum=0.1, affine=False, track_running_stats=False); (2): Dropout(p=0.3, inplace=False); (3): LeakyReLU(negative_slope=0.01, inplace=True); (4): Conv2d(64, 16, kernel_size=(3, 3), stride=(1, 1), padding=(1, 1)); (5): InstanceNorm2d(16, eps=1e-05, momentum=0.1, affine=False, track_running_stats=False); (6): LeakyReLU(negative_slope=0.01, inplace=True); (7): Dropout(p=0.3, inplace=False)))
(enc1): _EncoderBlock( (encode): Sequential((0): Conv2d(32, 64, kernel_size=(3, 3), stride=(1, 1), padding=(1, 1)); (1): InstanceNorm2d(64, eps=1e-05, momentum=0.1, affine=False, track_running_stats=False); (2): LeakyReLU(negative_slope=0.01, inplace=True); (3): Dropout(p=0.3, inplace=False); (4): Conv2d(64, 64, kernel_size=(3, 3), stride=(1, 1), padding=(1, 1)); (5): InstanceNorm2d(64, eps=1e-05, momentum=0.1 , affine=False,
track_running_stats=False)(6): LeakyReLU(negative_slope=0.01, inplace=True)(7): Dropout(p=0.3, inplace=False);(8): MaxPool2d(kernel_size=2, stride=2, padding=0, dilation=1, ceil_mode=False)))
(enc2): _EncoderBlock( (encode): Sequential((0): Conv2d(64, 128, kernel_size=(3, 3), stride=(1, 1), padding=(1, 1)); (1): InstanceNorm2d(128, eps=1e-05, momentum=0.1, affine=False, track_running_stats=False);(2): LeakyReLU(negative_slope=0.01, inplace=True)(3): Dropout(p=0.3, inplace=False); (4): Conv2d(128, 128, kernel_size=(3, 3), stride=(1, 1), padding=(1, 1));(5): InstanceNorm2d(128, eps=1e-05, momentum=0.1, affine=False, track_running_stats=False); (6): LeakyReLU(negative_slope=0.01, inplace=True);(7): Dropout(p=0.3, inplace=False);(8): MaxPool2d(kernel_size=2, stride=2, padding=0, dilation=1, ceil_mode=False)))
(dec2): _DecoderBlock( (decode): Sequential( (0): Conv2d(256, 256, kernel_size=(3, 3), stride=(1, 1), padding=(1, 1)) (1): InstanceNorm2d(256, eps=1e-05, momentum=0.1,
affine=False, track_running_stats=False); (2): Dropout(p=0.3, inplace=False);(3): LeakyReLU(negative_slope=0.01, inplace=True);(4): Conv2d(256, 64, kernel_size=(3, 3), stride=(1, 1), padding=(1, 1));(5): InstanceNorm2d(64, eps=1e-05, momentum=0.1, affine=False, track_running_stats=False)(6): LeakyReLU(negative_slope=0.01, inplace=True); (7): Dropout(p=0.3, inplace=False)))
(enc3): _EncoderBlock((encode): Sequential( (0): Conv2d(128, 256, kernel_size=(3, 3), stride=(1, 1), padding=(1, 1)) (1): InstanceNorm2d(256, eps=1e-05, momentum=0.1, affine=False, track_running_stats=False); (2): LeakyReLU(negative_slope=0.01, inplace=True); (3): Dropout(p=0.3, inplace=False); (4): Conv2d(256, 256, kernel_size=(3, 3), stride=(1, 1), padding=(1, 1)); (5): InstanceNorm2d(256, eps=1e-05, momentum=0.1, affine=False, track_running_stats=False);(6): LeakyReLU(negative_slope=0.01, inplace=True) (7): Dropout(p=0.3, inplace=False); (8): MaxPool2d(kernel_size=2, stride=2, padding=0, dilation=1, ceil_mode=False)))
(dec3): _DecoderBlock((decode): Sequential((0): Conv2d(512, 512, kernel_size=(3, 3), stride=(1, 1), padding=(1, 1)); (1): InstanceNorm2d(512, eps=1e-05, momentum=0.1, affine=False, track_running_stats=False); (2): Dropout(p=0.3, inplace=False); (3): LeakyReLU(negative_slope=0.01, inplace=True) ;(4): Conv2d(512, 128, kernel_size=(3, 3), stride=(1, 1), padding=(1, 1)); (5): InstanceNorm2d(128, eps=1e-05, momentum=0.1, affine=False, track_running_stats=False); (6): LeakyReLU(negative_slope=0.01, inplace=True) (7): Dropout(p=0.3, inplace=False)))
(enc4): _EncoderBlock( (encode): Sequential((0): Conv2d(256, 512, kernel_size=(3, 3), stride=(1, 1), padding=(1, 1)); (1): InstanceNorm2d(512, eps=1e-05, momentum=0.1, affine=False, track_running_stats=False); (2): LeakyReLU(negative_slope=0.01, inplace=True); (3): Dropout(p=0.3, inplace=False); (4): Conv2d(512, 512, kernel_size=(3, 3), stride=(1, 1), padding=(1, 1)); (5): InstanceNorm2d(512, eps=1e-05, momentum=0.1, affine=False, track_running_stats=False); (6): LeakyReLU(negative_slope=0.01, inplace=True); (7): Dropout(p=0.3, inplace=False); (8): MaxPool2d(kernel_size=2, stride=2, padding=0, dilation=1, ceil_mode=False)))
(dec4): _DecoderBlock((decode): Sequential((0): Conv2d(1024, 1024, kernel_size=(3, 3), stride=(1, 1), padding=(1, 1)) (1): InstanceNorm2d(1024, eps=1e-05, momentum=0.1, affine=False, track_running_stats=False); (2): Dropout(p=0.3, inplace=False); (3): LeakyReLU(negative_slope=0.01, inplace=True); (4): Conv2d(1024, 256, kernel_size=(3, 3), stride=(1, 1), padding=(1, 1));(5): InstanceNorm2d(256, eps=1e-05, momentum=0.1, affine=False, track_running_stats=False); (6): LeakyReLU(negative_slope=0.01, inplace=True); (7): Dropout(p=0.3, inplace=False)))
(enc5): _EncoderBlock((encode): Sequential( (0): Conv2d(512, 1024, kernel_size=(3, 3), stride=(1, 1), padding=(1, 1)); (1): InstanceNorm2d(1024, eps=1e-05, momentum=0.1, affine=False, track_running_stats=False); (2): LeakyReLU(negative_slope=0.01, inplace=True) ;(3): Dropout(p=0.3, inplace=False); (4): Conv2d(1024, 1024, kernel_size=(3, 3), stride=(1, 1), padding=(1, 1)) (5): InstanceNorm2d(1024, eps=1e-05, momentum=0.1, affine=False, track_running_stats=False); (6): LeakyReLU(negative_slope=0.01, inplace=True); (7): Dropout(p=0.3, inplace=False);(8): MaxPool2d(kernel_size=2, stride=2, padding=0, dilation=1, ceil_mode=False)))
(dec5): _DecoderBlock( (decode): Sequential( (0): Conv2d(2048, 2048, kernel_size=(3, 3), stride=(1, 1), padding=(1, 1)); (1): InstanceNorm2d(2048, eps=1e-05, momentum=0.1, affine=False, track_running_stats=False); (2): Dropout(p=0.3, inplace=False); (3): LeakyReLU(negative_slope=0.01, inplace=True); (4): Conv2d(2048, 512, kernel_size=(3, 3), stride=(1, 1), padding=(1, 1)); (5): InstanceNorm2d(512, eps=1e-05, momentum=0.1, affine=False, track_running_stats=False); (6): LeakyReLU(negative_slope=0.01, inplace=True); (7): Dropout(p=0.3, inplace=False)))
(center): _DecoderBlock( (decode): Sequential( (0): Conv2d(1024, 1024, kernel_size=(3, 3), stride=(1, 1), padding=(1, 1)); (1): InstanceNorm2d(1024, eps=1e-05, momentum=0.1, affine=False, track_running_stats=False); (2): Dropout(p=0.3, inplace=False); (3): LeakyReLU(negative_slope=0.01, inplace=True); (4): Conv2d(1024, 1024, kernel_size=(3, 3), stride=(1, 1), padding=(1, 1)) (5): InstanceNorm2d(1024, eps=1e-05, momentum=0.1, affine=False, track_running_stats=False); (6): LeakyReLU(negative_slope=0.01, inplace=True); (7): Dropout(p=0.3, inplace=False)))
(output_block): Sequential((0): Conv2d(16, 16, kernel_size=(3, 3), stride=(1, 1), padding=(1, 1)); (1): InstanceNorm2d(16, eps=1e-05, momentum=0.1, affine=False, track_running_stats=False); (2): LeakyReLU(negative_slope=0.01, inplace=True); (3): Conv2d(16, 16, kernel_size=(3, 3), stride=(1, 1), padding=(1, 1)); (4): InstanceNorm2d(16, eps=1e-05, momentum=0.1, affine=False, track_running_stats=False); (5): LeakyReLU(negative_slope=0.01, inplace=True)) (final_conv): Conv2d(32, 1, kernel_size=(1, 1), stride=(1, 1)))

The training scheme comprised the three data batches which were used to train and evaluate the model: LB2315; LB2319; LB2342. Two normalization schemes were tested. The first one consisted in normalizing the mean of the fluorescent image to 0.5 and the standard deviation to 0.125. The second scheme consisted in scaling all images' intensities onto the interval 0 to 1. The second scheme was chosen. Then the training loss was chosen to be a combination of a smooth_l1_loss for pixel-to-pixel detail and binary cross entropy to learn the distribution of the fluorescence signal. 80% of the data was used for training and 20% was used for testing. The following parameters were used for the training procedure: Number of epochs: 1000; Batch size: 60; Learning rate: 0.001.

A two-step *in silico* labelling pipeline was also trained in which a second U-Net is trained to predict the residual image obtained by subtracting the output of the first U-Net from the original fluorescence image, using the concatenated phase contrast image and first network output as inputs.

### Results

### Classification of macrophage polarization subtype using live cell phase contrast and fluorescence imaging

First, the inventors demonstrate how an embodiment of the invention can be used to classify macrophage polarization directly from phase contrast and fluorescent microscopy images. This process involves the training, evaluation, and deployment of a classifier following the differentiation of hiPSCs into polarised macrophages. **Figure 9** details an overview of the model, from the point of having obtained phase contrast and fluorescent images, to the point of classification of macrophage polarization. As shown on Figure 9, macrophage cells are delineated in the phase contrast images using a standard segmentation model. The masks thus obtained are then used to extract morphological (region, shape and texture) features from each separate cell. Using the well-of-origin label (i.e. which well each individual cell came from), a classifier is trained to predict the polarization of macrophages from the morphological features.

Human induced pluripotent stem cells (hiPSCs) were differentiated first into hematopoietic progenitor cells, then monocytes, and finally polarised macrophages (see Materials and Methods) and as additionally described in Cao et al. 2020, Arango Duque 2014 and Cao et al. 2019. **Figure 10** shows a schematic overview of the polarization process. Briefly, cryopreserved CD14+ hiPSC-derived monocytes were thawed in IF9S supplemented with 80 ng/mL M-CSF to enable further differentiation to naive M0 macrophages in 7 days. Subsequently, cells were replated and 24 hours later polarized to M1 macrophages using 10 ng/mL LPS + 20 ng/mL IFN-γ, 20 ng/mL IL-4 to generate M2a macrophages and 80 ng/mL M-CSF + 10 ng/mL IL-10 was used to polarize to the M2c subtype. Cells were fully polarized in 48 hours.

Validation of polarization status was performed through FACS flow-cytometry and cytokine screening (see Materials and Methods). Exemplary results can be seen in **Figures 7** and **8** - alongside transcriptomic data. FACS and cytokine secretion were chosen to validate the predicted polarization as there is no direct reporter for cell type in this context, with cytokine secretion being a specific way to distinguish between macrophage subtypes compared to solely analysing cell morphology, which does overlap somewhat between subtypes due to the spectral nature of macrophage polarization. **Figure 7** shows expression of the macrophage markers CD80, CD163 and CD206 on 48 hour polarized macrophages. The data show that there is overlap between different subtypes. CD80 expression is highest in M1 macrophages, but also expressed in M0, M2a and M2c subtypes. CD163 is expressed throughout all macrophage subtypes, but with the highest intensity in M2c macrophages. CD206 is equally expressed in all 4 subtypes. **Figure 8** shows data on cytokine secretion in cell culture supernatant measured using cytokine release assays. Upon 48 hours polarization TNF-α and IL-6 is secreted solely by M1 macrophages. TARC and IL-4 secretion is specific for M2a macrophages and the M2c subtype selectively secretes IL-10 confirming the macrophage subtypes selectively secrete cytokines.

Whilst most literature previously used macrophages derived from peripheral blood, the inventors chose to use an iPSC-based methodology to allow for an unlimited supply of monocytes from which to produce polarised macrophages. The inventors began Incucyte imaging of the cells after the introduction of the previously described differentiation factors. They then captured images of the cells at regular intervals of 4 hours. The Incucyte system contains a widefield microscope with the ability for automatic adjustment of the z-axis position. It can be used to compute phase-contrast images of samples. Additionally, there are two fluorescent channels for the measurement of fluorescent emissions from samples, which can be used with a variety of dyes and cell reporter-expressed fluorophores. Initially, the inventors conducted an exhaustive investigation of different imaging methods to highlight the difference between macrophage polarizations. These methods included the use of fluorescent cell line reporters and various kinds of immunostaining. The inventors found the use of an F-actin dye to illuminate the cytoskeletal structure across macrophage polarizations to be most informative and confirmed that the stained cells remained similar to those that were not stained. Unlike in Rostam et al. 2017, the inventors used a non-cytotoxic, permeating F-actin dye so as to screen the polarization of live macrophage cells rather than being limited to a single time point. Whilst this is a distinct advantage compared to imaging fixed cells that may no longer be representative of the cell's natural state, with live cells it is more difficult to ensure consistency in the intensity of the dye over time. Overall, however, the inventors determined that the inclusion of images stained for F-actin improved the overall accuracy of the experiments.

Once the staining protocol was developed (see Materials and Methods), the inventors gathered several batches of macrophage image data with similar imaging conditions. 3 separate batches of macrophages, as described in Materials and Methods, were differentiated, and imaged by the inventors using the Incucyte system - a microscope-based live-cell imaging platform embedded into an incubator unit. Images were taken every four hours for 48 hours after polarization was initiated. Ultimately, the inventors observed morphological changes after 24 hours, and so earlier time points were not included in classification (i.e. the classifier was trained using the data acquired at the 48 hours time point). **Figures 11** and **12** give examples of phase contrast and F-actin labelled images showing the differing morphology and distinct F-actin distribution between macrophage subtypes.

Cell segmentation was performed based on the phase contrast images only, using CellPose (Stringer et al. 2021). The segmentation from the phase contrast images was then applied to the fluorescence images. The inventors performed outlier detection to ensure the removal of segmentation inaccuracies due to the clustering of cells, using the Isolation Forest algorithm as implemented in sklearn.ensemble.IsolationForest (see https://scikit-learn.org/stable/modules/generated/sklearn.ensemble.lsolationForest.html). The isolation forest is applied to the set of features described above. It estimates outliers and inliers in an unsupervised way. The inventors investigated varying the density at which the monocytes were seeded, in order to determine the optimal seeding density at which the monocytes still differentiated but were not excessively dense, so as to obtain good cell segmentation. They determined that at 25,000 cells/well (96 wells plate), cell polarization and segmentation was successful. Other cell seeding densities could also be used but at much lower seeding densities some irregularities in cell morphology were seen. The total number of macrophage cells in each batch, as well as the ratio of different cell polarizations (where **1** is the polarization with the least number of cells in each batch) can be seen in **Table 2.** This segmentation was inferred from phase-contrast images, as the inventors found that the visibility of cell boundaries and precise shape was better in phase-contrast images compared to F-actin fluorescent microscopy images. A labelled mask of cell outlines was thus obtained for each well defining the smallest rectangles that fit each individual identified cell.

**Table 2 - Total number of macrophage cells and ratio of different cell polarizations from each viable cell batch.**

| Cell Batch | Total Number of Macrophage Cells | Ratio of Polarizations (M0: M1: M2a: M2c) |
|---|---|---|
| LB2315 | 25050 | 1.47 : **1** : 1.1 : 1.44 |
| LB2319 | 72127 | 1.42 : **1** : 1.02: 1.13 |
| LB2342 | 24306 | 1.97 : 1.28 : **1** : 1.47 |

Prior to feature extraction, the images were pre-processed by assigning a value of 0 to pixels outside of the segmented areas in the phase contrasted images. Fluorescent masks were then calibrated through the Incucyte software calibration pipeline for fluorescence. In particular, the generated image has a linear scaling factor applied to it so that pixel values are in calibrated units. The calibration is done against a known fluorescence standard.

Morphological features were then extracted from the phase contrast image for each cell defined by the generated mask, as already described (see Materials and Methods), in order to differentiate between macrophage polarizations. The same metrics described in the feature extraction methodology were then measured on the fluorescence images within the area of the cell outlines extracted from the phase-contrast images and finally, all features were concatenated. In total, 200 features per cell were obtained - 100 values each from the phase contrast image and fluorescent image of each cell. **Figure 13** shows dimensionally reduced feature manifolds for the different populations. **Figure 13A** shows values for each cell along the first two principal components of a principal components analysis (PCA) of the features. The colour of each point indicates the cell polarization as determined by the cell culture well label (i.e. assumed ground truth polarization state). **Figure 13B** shows tSNE plots of the same features, again with points coloured according to cell polarization as determined by the cell culture well label. The plots show that there are regions of feature space with higher prevalence of different polarizations, although some overlap can be seen between the morphology of different polarizations. **Figure 13C** shows the data for one of the batches on **Figure 13B****,** plotting all 73787 cells as on Figure 13B (left) and looking at what is the most frequent cell in each region of the feature space (right). With the thresholding applied to the tSNE (right) we can see that the features give separation to the different polarizations. This indicates that the feature space does map out biological differences in structure in the data, indicating that reliable classification using this feature space may be possible.

Thus, a macrophage polarization classifier was trained, evaluated, and validated as described (see Materials and Methods). Different segmentation methods were tested before settling one the one mentioned above which provided best performance. Further, models using only phase contrast data were compared with models using phase contrast and f-actin 1 data, showing that the latter performed better. Ultimately, the classification pipeline achieved the following accuracy: LB2315: 76% with support size of 8350 cells, LB2319: 71% with support size of 23802 cells and LB2342: 72% with support size of 8021 cells. The variation across models over the parameter search was within a 5% margin, indicating that classifier performance is not excessively dependent on parameter configuration. Classification results for the evaluations of each cell batch are shown in **Table 3**. Across batches the classifier achieved the following accuracies: M0: 78%, M1: 79%, M2a: 56%, M2c: 69%, Overall: 70%.

**Table 3. Classification results for batch LB2315, batch LB2319, and batch LB2342. The precision, recall, f1-score and support size for each polarization are shown. The averaged valued which is a task-level measure of success is also shown. The support size (number of data points (cells)) is shown for each polarization and the whole batch task (i.e., the size of the batch test dataset), as well as the accuracy for the task.**

| **LB2315** | **precision** | **recall** | **F1-score** | **support** |
|---|---|---|---|---|
| M0 | 0.73 | 0.78 | 0.76 | 2452 |
| M1 | 0.86 | 0.88 | 0.87 | 1664 |
| M2a | 0.66 | 0.62 | 0.64 | 1833 |
| M2c | 0.79 | 0.76 | 0.77 | 2401 |
| **Accuracy** | | | **0.76** | **8350** |
| **Macro avg** | 0.76 | 0.76 | 0.76 | 8350 |
| **Weighted avg** | 0.76 | 0.76 | 0.76 | 8350 |

| **LB2319** | **precision** | **recall** | **F1-score** | **support** |
|---|---|---|---|---|
| M0 | 0.72 | 0.76 | 0.74 | 7385 |
| M1 | 0.75 | 0.77 | 0.76 | 5204 |
| M2a | 0.67 | 0.67 | 0.67 | 5311 |
| M2c | 0.68 | 0.62 | 0.65 | 5902 |
| **Accuracy** | | | 0.71 | 23802 |
| **Macro avg** | 0.71 | 0.71 | 0.71 | 23802 |
| **Weighted avg** | **0.71** | **0.71** | **0.71** | **23802** |

| **LB2342** | **precision** | **recall** | **F1-score** | **support** |
|---|---|---|---|---|
| M0 | 0.69 | 0.76 | 0.72 | 2768 |
| M1 | 0.81 | 0.84 | 0.82 | 1795 |
| M2a | 0.72 | 0.58 | 0.64 | 1402 |
| M2c | 0.71 | 0.68 | 0.69 | 2056 |
| **Accuracy** | | | 0.72 | 8021 |
| **Macro avg** | 0.73 | 0.71 | 0.72 | 8021 |
| **Weighted avg** | 0.72 | 0.72 | 0.72 | 8021 |

**Figure 14** shows the confusion matrices for the three batches. High percentages on the diagonal indicate a good classification accuracy. The matrices show that accuracy is overall higher for the M0 and M1 polarizations, and lower for M2a and M2c. Furthermore, the main misclassification occurs when M2a and M2c cells are misclassified as M0s. This might be due to some overlap between the possible morphologies of M0 cells and M2a and M2c cells. Interestingly the misclassification of M2a as M2c or vice-versa is typically not high, even though the two types are sub-branches of the same polarization (M2).

To gain further understanding into which features drove the model classification performance, the inventors investigated feature importance for predictions for each batch and across batches. Feature importance is the average reduction in log loss classification error calculated during model fitting, as averaged across every node within each tree and across trees, for each individual feature. In other words, importance is calculated for a single decision tree by the amount that each attribute split point improves a performance measure (e.g. node purity), weighted by the number of observations the node is responsible for. If the reduction in error (log loss) is high across many nodes in many trees for a particular feature, that results in a high "importance" of the feature ([Hastie et al. 2009]). As already mentioned, of the 200 morphological features calculated for each cell, the first 100 were measured on the phase contrast image and the remaining 100 were measured on the fluorescence image.

**Figure 15** shows that most of the 200 features contribute to cell classification, however, in all batches, F-actin fluorescent features (feature numbers 100 to 200) contributed to a larger extent when delineating the classification function. The inventors determined that cell elongation (as captured by the cell eccentricity) and cell shape regularity (as captured by the cell solidity feature), along with F-actin distribution (as captured by f-actin texture features), were the most important features overall (see also Figure 16, which shows the feature importance when evaluated across all batches). Note that on figures 15 and 16 the order of the features is the same order as listed above (i.e. the feature number corresponds to the order in the list provided in the Methods section above). Note that because many of the features are related to each other, what exact features take greatest importance depends on the training of the algorithm. The inventors further found that while all shape features contributed to model performance, the contribution of individual texture features was less interpretable meaning that it was more difficult to select specific texture features that drive the performance of the model. The inventors chose not to perform feature selection, in order to keep the model as general as possible (since most features contribute to some extent to the classification, and the exact most important features depend on the batch). **Figure 15** shows individual features that contribute a much higher importance than others, in a batch specific manner. This is likely due to the stochasticity in the growth of trees. If a few texture features contribute similar but not identical information to the classifier, one might be selected most often by the gradient-boosting algorithm and have a higher importance, and the importance left to the other features indicate additional information provided by the other features which the first one could not provide. There could be some batch effects in the fluorescence output that lead to the most important texture feature not being the same across the three batches, underlining the benefits of using multiple texture features.

Finally, the inventors evaluated the classifier with the whole dataset (i.e., the union of all three batches of cells) which contained a total of 130,364 cells. The unionised data set was randomly split into training and test sets. The training set contained two thirds of the data, with the test set holding the remaining third. They evaluated the ability of the model to predict polarization of cells from all batches combined the results of which are shown in **Figure 17****,** and **Table 4**. The model achieved a 71% overall accuracy across the different classes of polarization. Example outputs of the classification for the four different polarizations can be seen in **Figure 18**. The specific labels are not important but the colours indicate that the model mostly predicted homogeneous labels across single wells.

**Table 4. The precision, recall, f1 score and the support size are given for each polarization, and the average across polarizations. The overall accuracy is also shown.**

| **All cells** | **precision** | **recall** | **F1-score** | **support** |
|---|---|---|---|---|
| M0 | 0.71 | 0.76 | 0.73 | 12711 |
| M1 | 0.78 | 0.81 | 0.79 | 8578 |
| M2a | 0.67 | 0.63 | 0.65 | 8556 |
| M2c | 0.70 | 0.64 | 0.67 | 10389 |
| **Accuracy** | | | 0.71 | 40245 |
| **Macro avg** | 0.71 | 0.71 | 0.71 | 40245 |
| **Weighted avg** | 0.71 | 0.71 | 0.71 | 40245 |

In conclusion, the inventors demonstrated that a model can be developed to classify macrophages based on phase contrast images and fluorescent microscopy images of the cells' cytoskeleton (F-actin). They designed a feature-extraction pipeline to measure morphological aspects of the cells that distinguish different macrophage polarizations. They showed that morphology captured differences across macrophage polarizations, as evidence by the performance of the trained classifier.

The trained model can be integrated into any practical applications that benefit from efficient analysis of new macrophage time-lapse data in terms of macrophage subtypes present and associated inflammatory metrics. For example, the ability to quantify macrophage polarization in live cells means that at any point in a time course experiments, inflammatory metrics such as the number of macrophages polarised into states that are considered 'pro-inflammatory' can be obtained. These can be complemented with metrics such as the amount of cytokines released by the cells in medium (e.g. using assays such as LEGENDplex^{™} as described above - see Methods). As these measurements are based obtained from the cell culture medium, they can be obtained without disrupting the cells, thereby enabling live monitoring of the cells using the combination of the machine learning methods described here and the medium data without disrupting the cell culture. For example, the approach described can be deployed for the assessment of drugs. This would involve preparing iPSC macrophages as described, introducing drug stimuli, and gathering live imaging data which can then be used in online classification of macrophage polarization. Metrics such as the speed of polarization of the macrophages is likely to be linked to the efficacy and/or safety of the drug under investigation. Further, using metrics such as speed of polarization and/or the final number or proportion of polarized cells it would be possible to derive dose response curves from the live imaging data. Future work will also focus on obtaining the M2b and M2d polarization states from iPSCs, as well as the cytokines and cell surface markers required to identify them, so as to include a wider range of macrophage subtypes in the classification process.

Additionally, the approaches described herein are not limited to F-actin staining (real or virtual, see below). Indeed, other live cell staining approaches such as a mitochondrial staining and reporter lines marking cell nuclei can also be integrated in this workflow and analysed in a similar manner to the F-actin data, providing further features for classification. Note that the use of live cell staining as described in the present examples is significantly different from classification using stained images from fixed cells. Indeed, with fixed cells the timing of staining and image acquisition can be controlled such that the intensity of the signal associated with the dye is controlled. By contrast, when using live cells the intensity of the signal associated with a dye may vary even between cells that have the same morphological characteristics. Thus, live cell classification is a significantly more complex and uncertain problem than fixed cell classification, and prior to performing the present work there was no certainty as to whether or how macrophage subtype classification in live cells would be achievable.

### Classification of macrophage polarization subtypes using phase contrast live cell imaging and virtual staining

The inventors then set out to demonstrate how the methods described above can be used to develop a method of classifying macrophage polarization from label-free microscopic images.

The inventors postulated that an in-silico model capable of translating phase contrast images into F-actin images would enable the cytoskeletal patterns within cells to be revealed without having to stain the cells, thus simplifying the workflow. They used a U-Net deep neural network (DNN) (Ronneberger et al. 2015) to translate phase contrast images into F-actin labelled images following the concept of in-silico labelling (Christiansen et al. 2018). Example results from the U-Net DNN are shown in **Figure 19****.** These show that the in-silico F-acting staining images from the model (labelled "output") capture much of the content of the original F-actin images (labelled "original").

F-actin patterns can occur along different parts of the cytosol as a sign of ongoing cell-movements through pseudopodia. As can be seen on Figure 19, the resulting bright spots/streaks are not yet fully captured by the model. In any image in-painting task there is a tendency for models to converge to average correspondences between the input and output images in the training set. Additionally, it is possible that not all F-actin patterns will be associated with signal in the phase contrast images. In this case, these factors are what likely leads to some highly detailed and time-varying F-actin structures not being fully captured by the model.

The inventors designed a strategy to address at least some of these problems, by training a second neural network to predict the residuals in the high brightness regions. The principles of this approach are illustrated **Figure 20****.** In this two step in silico labelling, a first U-Net is trained to capture the overall intensity levels, and a second U-Net is trained on the phase contrast image and the residual image (subtraction of the first output labelled image from the original f-actin image) to compensate for the missing details.

The data show that much of the ground F-actin intensity is already captured to a good extent by the first model, such that the second neural network could focus on predicting the residual image obtained by subtracting the output from the original image. Using the phase contrast and current network output as input for the second network enables the model to capture any residual information in the phase contrast image that was not yet captured in the first network output.

Based on this work, the inventors demonstrated that a label free classifier of macrophage subtypes can be obtained using an in-silico labelling DNN trained to translate phase contrast images of the cells into f-actin fluorescence images.

### Application to macrophage repolarization

One particularly useful application of the methods described are its ability to be applied to the investigation of repolarization of macrophages that have already been polarised into one subtype. Macrophages are plastic cells that can adapt to external stimuli and their external environment, such that polarization is a dynamic phenomenon. Repolarization is a phenomenon that has been explored as a therapeutic strategy for example in the context of cancer, where M2 tumour-associated macrophages that support tumour growth could be repolarised to M1 phenotypes (Anand et al. 2023). The ability to study this phenomenon in live cells would be extremely valuable in the context of assessing such therapeutic strategies.

The inventors exposed macrophages that had been previously polarised into different subtypes, to culture media containing the stimuli to convert the cells to M0, M1, M2a or M2c macrophages, evaluating the plasticity of these cells. The inventors showed that, based on cell morphology, M0 and M2a macrophages can be repolarised to either M0, M1, M2a or M2c subtypes. They also showed that M1 macrophages can be partially repolarised to M0 with some cells remaining as M1 macrophages. However, in the case that the cell remains in the M1 polarization state, the inventors observed cell death due to cytokine secretion. The inventors also observed partial conversion from M2c to M0 or M2a (in which case the inventors observed that vacuoles characteristic of M2c still remain), but that some cells still remain polarised as M2c. **Figure 21** shows macrophage morphology following repolarization of the different macrophage subtypes.

The inventors showed that, upon repolarization, macrophages were able to secrete cytokines specific to their subtype. For example, cells repolarised to the M1 subtype were shown to be able to secrete the pro-inflammatory cytokines TNF-α and IL-6. For cells repolarised to the M2a subtype, IL-4 and TARC are secreted in all conditions except from when M0 macrophages are repolarised to M2a. For cells repolarised to M2c, the inventors demonstrated that IL-10 is secreted. See **Figure 22** for a detailed representation of the cytokine secretion profiles before and after repolarization of the different macrophage subtypes.

Following repolarization, the inventors performed flow cytometry to measure the expression of the cell surface markers CD80 and CD163. **Figure 23** shows the expression of the cell surface markers CD80 (Top) and CD163 (Bottom) following repolarization of the different macrophage subtypes. In line with the inventors' expectations, M1 macrophages showed the highest expression of CD80. The inventors demonstrated that, upon repolarization to other subtypes, CD80 expression decreased but still remained higher than in subtypes that were directly polarised from M0. Additionally in line with the inventors' expectations, M2c macrophages showed the highest expression of CD163. The inventors demonstrated that, upon repolarization to other subtypes, CD163 expression decreased but remained higher than expression in subtypes directly polarised from M0. This data shows that repolarization can be performed in vitro, and that the morphologies obtained are similar to the expected polarization states, such that the classification methods described herein should be able to be applied during repolarization.

This shows that the image-based analysis pipeline described herein would be usable as a tool to study repolarization and the effect of drugs on this phenomenon.

### References

A number of publications are cited above in order to more fully describe and disclose the invention and the state of the art to which the invention pertains. Full citations for these references are provided below. The entirety of each of these references is incorporated herein.
Stringer C, Wang T, Michaelos M, Pachitariu M. Cellpose: a generalist algorithm for cellular segmentation. Nature methods. 2021 Jan;18(1):100-6.
Edlund, C., Jackson, T.R., Khalid, N. et al. LIVECell-A large-scale dataset for label-free live cell segmentation. Nat Methods 18, 1038-1045 (2021).
Van der Walt S, Schönberger JL, Nunez-Iglesias J, Boulogne F, Warner JD, Yager N, Gouillart E, Yu T. scikit-image: image processing in Python. PeerJ. 2014 Jun 19;2:e453.
Coelho LP. Mahotas: Open source software for scriptable computer vision. Journal of Open Research Software. 2013. Vol. 1, issue 1, article e3. dx.doi.org/10.5334/jors.ac
Hu MK. Visual pattern recognition by moment invariants. IRE transactions on information theory. 1962 Feb;8(2):179-87.
Haralick RM, Shanmugam K, Dinstein IH. Textural features for image classification. IEEE Transactions on systems, man, and cybernetics. 1973 Nov(6):610-21.
Hall-Beyer M. GLCM texture: a tutorial. National Council on Geographic Information and Analysis Remote Sensing Core Curriculum. 2000 Mar;3(1):75.
Chen T, Guestrin C. Xgboost: A scalable tree boosting system. InProceedings of the 22nd acm sigkdd international conference on knowledge discovery and data mining 2016 Aug 13 (pp. 785-794).
Ronneberger O, Fischer P, Brox T. U-net: Convolutional networks for biomedical image segmentation. InMedical Image Computing and Computer-Assisted Intervention-MICCAI 2015: 18th International Conference, Munich, Germany, October 5-9, 2015, Proceedings, Part III 18 2015 (pp. 234-241). Springer International Publishing.
Christiansen EM, Yang SJ, Ando DM, Javaherian A, Skibinski G, Lipnick S, Mount E, O'neil A, Shah K, Lee AK, Goyal P. In silico labeling: predicting fluorescent labels in unlabeled images. Cell. 2018 Apr 19;173(3):792-803.
Cao X, van den Hil FE, Mummery CL, Orlova VV. Generation and Functional Characterization of Monocytes and Macrophages Derived from Human Induced Pluripotent Stem Cells. Curr Protoc Stem Cell Biol. 2020 Mar;52(1):e108.
Arango Duque, G. and Descoteaux, A.. Macrophage Cytokines: Involvement in Immunity and Infectious Diseases. Frontiers in Immunology. 2014 Oct 7; 5(491)
Cao, X., Yakala, G. K., van den Hil, F. E., Cochrane, A., Mummery, C. L., & Orlova, V. V. Differentiation and Functional Comparison of Monocytes and Macrophages from hiPSCs with Peripheral Blood Derivatives. Stem Cell Reports. 2019 Jun 11; 12(6), 1282-1297.
Rostam HM, Reynolds PM, Alexander MR, Gadegaard N, Ghaemmaghami AM. Image based machine learning for identification of macrophage subsets. Scientific reports. 2017 Jun 14;7(1):3521.
Hastie T, Tibshirani R, Friedman JH, Friedman JH. Section 10.13.1 "Relative Importance of Predictor Variables", page 367, in The elements of statistical learning: data mining, inference, and prediction. New York: springer; 2009 Aug.
Anand N, Peh KH, Kolesar JM. Macrophage Repolarization as a Therapeutic Strategy for Osteosarcoma. Int J Mol Sci. 2023 Feb 2;24(3):2858.
Long, F. Microscopy cell nuclei segmentation with enhanced U-Net. BMC Bioinformatics 21, 8 (2020).
Phasefocus, September 2021, Quantifying Macrophage Activation and Proliferation Application Note https://www.phasefocus.com/application/files/2916/3293/1965/Phasefocus_-_AN017_-_Quantifying_Macrophage_Activation_and_Proliferation.pdf

Unless context dictates otherwise, the descriptions and definitions of the features set out above are not limited to any particular aspect or embodiment of the invention and apply equally to all aspects and embodiments which are described.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about" or "approximately", it will be understood that the particular value forms another embodiment. The terms "about" or "approximately" in relation to a numerical value is optional and means for example +/- 10%."and/or" where used herein is to be taken as specific disclosure of each of the two specified features or components with or without the other. For example, "A and/or B" is to be taken as specific disclosure of each of (i) A, (ii) B and (iii) A and B, just as if each is set out individually herein. Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps. Other aspects and embodiments of the invention provide the aspects and embodiments described above with the term "comprising" replaced by the term "consisting of" or "consisting essentially of", unless the context dictates otherwise.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof. While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations. Any section headings used herein are for organizational purposes only and are not to be construed as limiting the subject matter described.

## Claims

1. A method for identifying the macrophage polarization state of one or more macrophage cells in live cell culture, the method comprising:
obtaining, by a processor, one or more single cell label-free images obtained using an optical label-free imaging technology, each single cell image showing a single live macrophage cell in cell culture;
quantifying, by said processor and for each of the one or more single cell label-free images, a plurality of single cell image-derived features, wherein the plurality of single cell image-derived features comprise: one or more intensity features, one or more shape features and one or more texture features; and
identifying, by said processor, a macrophage polarization state associated with the single cell image using a trained machine learning classification model, wherein the trained machine learning classification model is configured to take as input values for the plurality of single cell image-derived features and classify, using said input, a corresponding single cell between a plurality of classes each associated with a different macrophage polarization state selected from: M0, M1, M2, and a plurality of M2 subtypes, optionally M2a, M2b, M2c and M2d.

2. The method of claim 1, wherein the machine learning classification model has been trained using training data comprising, for each of a plurality of training single cell label-free images, values of the plurality of single cell image-derived features and a macrophage polarization state label, wherein the label for a single cell image is derived from the cell culture from which the respective single cell label-free image is obtained, wherein the same label is assigned to each single cell image derived from the same cell culture,
optionally wherein the single cell macrophage polarization state labels that were used in the training of the machine learning classification model were derived from the assumed macrophage polarization state associated with the culture conditions in which the cells were culture, and/or were validated for the cell culture as a whole using one or more assays selected from: cytokine release assays, chemokine release assays, cell surface marker assays, and transcriptomics.

3. The method of any preceding claim, wherein the optical label free imaging technology is phase contrast microscopy, and/or
wherein obtaining, by said processor, one or more single cell label-free images obtained using an optical label free imaging technology, comprises:
receiving, by said processor, an optical label free image of a cell culture or portion thereof;
processing, by said processor, the optical label free image of the cell culture using a cell segmentation machine learning model.

4. The method of any preceding claim, wherein the plurality of classes each associated with a different macrophage polarization state include: a class associated with M0 macrophages, a class associated with M1 macrophages, and a plurality of classes associated with M2 macrophages, optionally wherein the plurality of classes associated with M2 macrophages are selected from M2a, M2b, M2c and M2d, and/or wherein the plurality of classes associated with M2 macrophages comprise a class associated with M2a macrophages and a class associated with M2c macrophages.

5. The method of any preceding claim, wherein the method further comprises
obtaining, by said processor, one or more single cell fluorescence images each corresponding to a single cell label-free image obtained using an optical label free imaging technology;
quantifying, by said processor and for each of the one or more single cell fluorescence image, a plurality of single cell image-derived features, wherein the plurality of single cell image-derived features comprise: one or more intensity features, one or more shape features and one or more texture features; and
wherein the trained machine learning classification model is configured to take as input values for the plurality of single cell image-derived features quantified for a single cell label-free image and for a corresponding single cell fluorescence image;
optionally wherein the one or more single cell fluorescence images comprise signal associated with one or more live cell fluorescent markers and/or reporters, optionally wherein a live cell fluorescent marker is selected from: a F-actin marker, a mitochondrial marker, a nuclear marker, a phagocytosis marker, a cytoplasm marker, and a membrane marker, optionally wherein a live cell fluorescent marker is a F-actin marker.

6. The method of claim 5, wherein the single cell image-derived features quantified for the single cell fluorescence image are the same as the single cell image-derived features quantified for the single cell image, and/or wherein the trained machine learning classification model is configured to take as input the concatenation of the plurality of single cell image-derived features quantified for a single cell label free image and the plurality of single cell image-derived features for a corresponding single cell fluorescence image.

7. The method of claim 5 or claim 6, wherein obtaining, by said processor, one or more single cell fluorescence images each corresponding to a single cell label-free image obtained using an optical label free imaging technology comprises:
receiving, by said processor, an optical label free image of a cell culture or portion thereof and a corresponding fluorescence image of the cell culture or portion thereof;
processing, by said processor, the optical label free image of the cell culture using a cell segmentation machine learning model, thereby obtaining one or more single cell label-free images; and
obtaining, by said processor, a single cell fluorescence image corresponding to each of one or more single cell label-free images by mapping the one or more single cell label-free images to the fluorescence image of the cell culture or portion thereof.

8. The method of any of claims 5 to 7, wherein the one or more single cell fluorescence images are images obtained using fluorescence microscopy or images obtained by providing the one or more single cell label-free images or an optical label free image of a cell culture or portion thereof comprising said single cell label-free images as input to a virtual staining machine learning model, optionally: wherein the virtual staining machine learning model comprises one or more deep neural networks, optionally one or more convolutional neural networks; and/or
wherein obtaining the one or more single cell fluorescence images comprises providing the one or more single cell label-free images or an optical label free image of a cell culture or portion thereof comprising said single cell label-free images as input to a virtual staining machine learning model, wherein a virtual staining machine learning model is a machine learning model configured to take as input a label-free image of a cell culture or portion thereof obtained using an optical imaging technology and provide as output a corresponding fluorescence image.

9. The method of claim 8, wherein the virtual staining machine learning model comprises:
a first machine learning model configured to take as input a label-free image of a cell culture or portion thereof obtained using an optical imaging technology and to provide as output a corresponding fluorescence image; and
a second machine learning model configured to take as input a label-free image of a cell culture or portion thereof obtained using an optical imaging technology and a corresponding fluorescence image obtained as an output of the first machine learning model, and to provide as output a residual fluorescent image, wherein a residual fluorescent image comprises signal from a corresponding fluorescent image not captured in the output of the first machine learning model.

10. The method of any preceding claim, wherein:
the machine learning classification model is a non-linear classification model, optionally wherein the machine learning classification model comprises one or more models selected from: a decision tree, random forest, gradient boosted tree, SVM with a non-linear kernel, and an artificial neural network with non-linear activation functions; and/or
the machine learning classification model comprises an ensemble of models whose predictions are combined, optionally a gradient boosted tree model; and/or
an intensity feature is a feature that quantifies the intensity or distribution of intensity of a signal in a single cell image, optionally wherein the one or more intensity features are selected from: an image moment, a maximum intensity over the pixels corresponding to the segmented cell, a minimum intensity over the pixels corresponding to the segmented cell, a mean intensity over the pixels corresponding to the segmented cell, a median intensity over the pixels corresponding to the segmented cell, a summed intensity over the pixels corresponding to the segmented cell, and a predetermined percentile of the distribution of intensity over the pixels corresponding to the segmented cell; and/or
a shape feature is a feature that quantifies an aspect of the shape of a segmented cell, optionally wherein the one or more shape features are selected from: the cell eccentricity, cell extent, cell perimeter, cell solidity, cell area, and area of the cell's convex hull; and/or
a texture feature is a feature that quantifies the perceived texture of a digital image, optionally wherein the one or more texture feature are selected from: Haralick texture features, and gray co-occurrence statistics.

11. The method of any preceding claim, wherein the plurality of single-cell image derived features comprise at least 20, at least 30, at least 40, at least 50, at least 60, at least 70, at least 80, at least 90 or about 100 features quantified for each single cell label-free image, and/or wherein the plurality of single-cell image derived features comprise at least 20, at least 30, at least 40, at least 50, at least 60, at least 70, at least 80, at least 90 or about 100 features quantified for each single cell fluorescence image and/or wherein the plurality of single-cell image derived features comprise on or more of: a cell eccentricity feature quantified for each single cell label-free image and/or for each single cell fluorescence image, a cell solidity feature quantified for each single cell label-free image and/or for each single cell fluorescence image, and one or more texture features quantified for each single cell fluorescence image.

12. The method of any preceding claim, wherein the method further comprises said processor, using the identified macrophage polarization state of said one or more macrophage cells, optionally at a plurality of time points during a cell culture, determining the value of one or more inflammatory metrics selected from: the speed of polarization into one or more selected macrophage subtypes (e.g. speed of polarization into M1 subtype, speed of polarization into any M2 subtype, speed of polarization into a specific M2 subtype), a polarization dynamics metric,the proportion of cells in a cell culture in one or more selected macrophage subtypes, the ratio of the number or proportion of cells in a cell culture in a first one or more selected macrophage subtypes relative to a second one or more selected macrophage subtypes, a metric indicative of polarization efficiency, a speed of repolarization into one or more selected macrophages subtypes, a repolarization dynamics metric, a number or proportion of cells in one or more selected macrophage subytpes after repolarization, a ratio of the number or proportion of cells in a cell culture in a first one or more selected macrophage subtypes after repolarization relative to a second one or more selected macrophage subtypes, and a metric indicative of repolarization efficiency.

13. A method of assessing the effect of one or more perturbations on macrophage polarization, the method comprising:
obtaining one or more label-free optical images of one or more cell cultures and optionally corresponding fluorescence images, wherein the one or more cell cultures each comprised a population of cells comprising macrophages or macrophage precursor cells exposed to one of the one or more perturbations, and
for each perturbation, identifying the macrophage subtype of one or more cells in one or more cell cultures exposed to the perturbation using said images and the method of any preceding claim, optionally wherein each perturbation is selected from: exposure to a compound or composition, genetic perturbation, or environmental condition, and/or wherein the method is for drug screening or high throughput drug safety evaluation and/or wherein the cell population comprises cells that are representative of a disease or disorder associated with macrophage dysfunction.

14. A method of providing a trained machine learning model for identifying the macrophage polarization state of one or more macrophage cells in live cell culture, the method including the steps of:
(i) obtaining, by a processor, a training data set comprising:
a plurality of single cell label-free images obtained using an optical label free imaging technology, each single cell image showing a single live macrophage cell in cell culture, or the values of a plurality of single cell image-derived features obtained by processing said optical images, and optionally, a plurality of single cell fluorescence images corresponding to the plurality of single cell label-free images or values of a plurality of single cell image-derived features obtained by processing said fluorescence images, and
a label associated with each of said plurality of single cell label-free images indicating a macrophage polarization state selected from: M0, M1, M2, and a plurality of M2 subtypes, optionally including M2a, M2b, M2c and M2d; and
(ii) training, by said processor, a machine learning classification model to identify a macrophage polarization state associated with the single cell images using said training data, wherein the trained machine learning classification model is configured to take as input values for the plurality of single cell image-derived features and classify, using said input, a corresponding single cell between a plurality of classes each associated with a different macrophage polarization state selected from: M0, M1, M2, and a plurality of M2 subtypes optionally selected from M2a, M2b, M2c and M2d.

15. A system comprising:
at least one processor; and
at least one non-transitory computer readable medium containing instructions that, when executed by the at least one processor, cause the at least one processor to perform the method of any of claims 1 to 14;
optionally wherein the system comprises one or more of: a cell culture environment (such as e.g. an incubator) and one or more label-free imaging devices.
